# EUROPEAN PATENT SPECIFICATION

(11) **EP 0 642 416 B1**
(45) Date of publication and mention of the grant of the patent: **01.10.2003**
(21) Application number: 94911743.6
(22) Date of filing: 24.03.1994
(51) Int. Cl.: B32B 17/02, B32B 17/04, B32B 19/02, B32B 23/02, B32B 27/02, B32B 27/04, C08F 2/50, C08L 63/02, C08L 63/04, C08L 63/06, C08L 63/10

(54) **FIBER/RESIN COMPOSITES AND METHOD OF PREPARATION**
FASER/HARZVERBUNDWERKSTOFFE UND METHODE ZUR DEREN HERSTELLUNG
COMPOSITES FIBRES-RESINES ET LEUR PROCEDE DE PREPARATION

(30) Priority: 24.03.1993 US 36325; 18.08.1993 US 108437
(43) Date of publication of application: 15.03.1995
(73) Proprietor: LOCTITE CORPORATION, Hartford, Connecticut 06106 (US)
(72) Inventor: KLEMARCZYK, Philip T., Collinsville, CT 06022 (US); OKAMOTO, Yoshihisa, Avon, CT 06001 (US); MORAN, James P., Jr., Farmington, CT 06032 (US)
(74) Representative: Nash, David Allan
(86) International application number: US9403452
(87) International publication number: WO94021455

(56) References cited:
- EP-A- 0 266 986
- EP-A- 0 412 588
- US-A- 3 922 426
- US-A- 3 962 184
- US-A- 4 092 443
- US-A- 4 254 012
- US-A- 4 546 131
- US-A- 4 892 764
- 37th International Sampe Symposium, March 9-12, 1992, (SHIMP), "Cyanate Ester-Cured Epoxy Resin Structural Composites", pages 293-305, see the Abstract and page 298, last paragraph.

## Description

### 1. Field of the Invention

The present invention relates generally to methods of making fiber/resin composites. In a specific aspect, the present invention relates to resin articles comprising arrays of continuous filaments, such as are formed by filament winding and prepregs.

### 2. Description of the Related Art

In the field of composite materials, a variety of fabrication methods and techniques have come into usage for producing fiber-reinforced resin matrix materials. Continuous filament processes have evolved which are adapted to automated production of filament-reinforced resin articles. The continuous fiber processes include filament winding, wherein the filament in the form of discrete strands or roving is coated with a rasin, then wound on a mandrel at a predetermined angle and winding thickness to yield composite articles having high strength when the resin borne on the filament is cured.

In order to have commercial utility the polymeric resins employed in filament winding operations must exhibit low initial viscosity and long pot-life in the process systems in which they are employed. Low viscosity is required in order that deposition of the resin an the filament be highly uniform in character, as is required to achieve substantially uniform properties in the final product article. If viscosity changes appreciably during the filament winding operation, the applied resin thickness may change significantly, resulting in localized stresses or discontinuities in the final product article, product articles which are not within required dimensional tolerance specifications, and inadequate curing of the resin. In addition, the tensional forces on the resin impregnated filaments being processed will significantly increase as the resin viscosity increases, to such extent that the filament becomes highly susceptible to snapping, i.e., tensionally breaking.

Long pot-life of the resin is particularly necessary in filament winding operations where processing times may be on the order of hours. Since the resin is continuously being applied to the filament in these processes, the resin bath or other source of the resin must be continually replenished with resin coating material, and it is therefore necessary that the resin not "set up" or gel in the source bath or other source container and applicating means.

For example, in the fabrication of rocket motors, a resin-bearing filament is wound onto a solid rocket fuel body. In such applications, since the filament winding operation may take upwards of 6 hours and since viscosity must be substantially stable during this period, a long pot-life resin is essential, and consequently the filament wound body must be rotated until full cure of the resin is achieved, which in the case of conventional epoxy resins can range from hours (for heat cured resins) to days (for resins cured at ambient temperatures). Continuous rotation of the mandrel and filament winding is essential in such cases, since cessation of rotation would result in the viscous resin sagging and dripping under gravitational forces, resulting in a resin-rich lower portion of the product article and a resin-poor upper portion of the product. Accordingly, it is desirable to cure the fiber array quickly once it has been formed.

The difficulties inherent in balancing the properties of long pot-life and a quick and easily controlled cure have resulted in the development of numerous types of resins. And within each class of resin, attempts have been made to vary the conditions under which the resins will cure effectively. The standard resins which have been employed in continuous filament processes, as well as in other systems of fiber/resin composite manufacture, generally have deficiencies which have specifically limited their utility in these processes.

The epoxy resins form an extremely important and versatile class of resins. These resins exhibit excellent resistance to chemicals, will adhere to glass and a variety of other materials, show electrical insulation properties, and are relatively easy to use. Among the epoxy resins, systems employing epoxy compounds in conjunction with olefinically unsaturated compounds have found wide acceptance in the art. In particular, resins comprising epoxies and acrylates have been found to be especially useful. This class of resins includes blends of epoxies and acrylates ("epoxy/acrylate" resins) as well as compositions wherein the principal resin component is an acrylic acid-modified epoxy wherein some or all of the epoxy groups have been consumed to produce unsaturated resins. Partially acrylated epoxies are occasionally identified as "dual-functional" compounds since they are designed to exhibit both epoxy and acrylate functional groups on the same molecule.

Within the aforementioned class of epoxy/acrylate systems, compositions have been generated which are adapted to various cure conditions. Such compositions have employed heat curing mechanisms, actinic radiation curing mechanisms, or a combination of both.

Heat curing alone has several disadvantages including reducing the viscosity of the resin, causing it to become more fluid and thereby making it more difficult to handle the article, as well as more difficult to achieve a product of isotropic character. In applications such as filament winding, this drop in viscosity results in resin drip, as previously mentioned. Yet heat curing of epoxy/acrylate systems is an effective and practical means of curing the resins to the fully hardened state that is the source of the resins' great utility.

Heat cured epoxy resin systems are disclosed by U.S. Patent Nos. 3,408,422 to May et al., 3,441,543 to Heilman, RE 27,973 (3,594,247) to Pennington et al., 3,678,131 to Klapprott et al., 4,017,453 to Heilman et al., 4,025,578 to Siebert, 4,447,586 to Shimp, 4,515,737 to Karino et al., and 5,011,721 to Decker et al.

Exemplary of heat cured compositions are the compositions of U.S. Patent No. 3,408,422 to May et al. May et al. discloses compositions of an acrylated epoxy polymer and a hydroxylamine (as a stabilizer), as well as unsaturated monomers and peroxides having decomposition temperatures below 150°C. The compositions described by May et al. are heat cured, and include curing agents such as "onium" salts.

The use of actinic radiation to cure or partially cure, i.e., gel the resin, can substantially increase the viscosity of the resin on the formed article. Actinic radiation generally cannot induce complete hardening of the resin and such systems usually employ a catalyst and/or a heat cure step to fully cure the resins.

An example of such a process is U.S. Patent No. 4,892,764 to Drain et al. which employs ultraviolet (UV) light induced polymerization, and requires additional curing at ambient temperatures for extended periods. The Drain et al. patent also employs an aliphatic diamine catalyst which significantly reduces the pot-life of the uncured resin. While the compositions of the Drain et al. patent exhibit some of the desirable resistance to the drip and sag of resin under the forces of gravity, this is due to the fact that they are designed to be cured at room temperature. The Drain compositions are not intended to be heat-cured and as a result exhibit low glass transition temperatures (T_{g}), thereby having limited utility in applications where the temperature resistance of the cured resins is critical.

Other UV curing systems are found in U.S. Patent No. 3,922,426 to Feltzin describing filament wound articles impregnated with an ultraviolet light curable resin comprising an unsaturated polyester, an unsaturated monomer, an organic peroxide, and a photosensitizer. More specifically, Feltzin discloses organic peroxides with half-lives at temperatures between 26°C and 172°C. Other filament winding systems using UV or other actinic radiation to cure resins include U.S. Patent Nos. 3,660,144, 3,660,145 and 3,660,371 to Johnson et al., 3,772,062 to Shur et al., and 4,479,984 to Levy et al.

Traditionally, dual-curing epoxy/acrylate systems, i.e., systems which employ both an initial actinic radiation exposure and a subsequent thermal polymerization step, have been used for numerous purposes including adhesives, coatings, and prepregs such as those involving filament winding. Such dual-curing prepreg compositions have employed blends of epoxies and acrylates, epoxy curing agents and photoinitiators.

Dual-curing compositions of this kind are described in U.S. Patent No. 4,092,443 to Green. Green discloses dual-cured filament impregnating resin compositions including a heat curable epoxide or epoxide-containing compound, a photopolymerizable component, such as acrylates, methacrylates and other polyolefinically unsaturated compounds. Heat activated curing agents such as amines, boron trihalides, imidazoles, and anhydrides, as well as optional use of photocatalysts, such as phenones and photo-activated organic peroxides, are also disclosed. The Green compositions, however suffer from a number of the disadvantages associated with dual-cured systems. Principally, these compositions provide little or no resistance to resin drip during the heating step. Articles formed from the Green compositions and process therefore require rotation during heating in order to retain uniformity of resin distribution and the isotropic characteristics and properties dependent thereon.

U.S. Patent No. 3,937,833 to Gruenwald describes the impregnation of insulated electromagnetic coils with dual-curing resin compositions. The preferred compositions are polyesters solubilized in unsaturated monomers and mixed with peroxides activated by high temperatures along with accelerators such as a tertiary amine or an organo-cobalt compound. The resins described by the Gruenwald patent are quickly gelled by exposing the surface of the applied resin to a highly reactive chemical cross-linking agent, i.e., organic peroxides such as methyl ethyl ketone peroxide, cyclohexanone peroxide, diacetyl peroxide, dilauryl peroxide, cumyl hydroperoxide and benzoyl peroxide. Alternatively, the quick gelation of the resin at the periphery at ambient temperature can be accomplished by incorporation of a photo activator such as a benzoin ether and exposure of the resin to UV light.

U.S. Patent No. 4,230,766 to Gaussens et al. discloses dual-curing compositions of (meth)acrylated epoxy resins, unsaturated monomers, photoinitiators, and organic peroxides. The resins of the Gaussens et al. patent are cured first by ultraviolet light exposure and heat exposure as a second cure step. The peroxides disclosed by Gaussens et al. include lauroyl peroxide and benzoyl peroxide.

U.S. Patent No. 3,935,330 to Smith et al. describes dual-curing resins including polyepoxide monomers or polymers, urea/formaldehyde resins, or a melamine/formaldehyde resin, and a thermally curable cross-linker. The compositions described by Smith et al. may also include a dual-functional (meth)acrylamide having at least one double bond and at least one oxirane group. Another component of the compositions includes an ultraviolet light sensitive acrylate. Free radical initiators are included such as organic peroxides including di-t-butyl peroxide, benzoyl peroxide, t-butyl hydroperoxide, perbenzoic acid, and t-butyl peracetic acid. Smith et al. also disclose photosensitizers including phenones. The compositions disclosed by Smith et al. are described as being cured by an ultraviolet light exposure and are subsequently exposed to heat.

The class of epoxy/acrylate resin systems also includes an especially useful subclass of resin systems which include, as an additional polymerizing component, a cyanate ester resin. Traditionally, cyanate ester resin compositions have employed thermosettable cyanate resins in combination with epoxies, acrylates and a variety of heat activated catalytic agents. Cyanate ester resin compositions have been found to be useful in applications ranging from castings and laminates to filament winding operations.

The following patents illustrate the state of the art of cyanate ester resin compositions. As a general rule, all cyanate ester resin compositions employ organic compounds having at least one cyanate ester functionality. These resin compositions are generally curable by heat and, as a result, include thermally activated catalytic agents such as amines, anhydrides, phenols, and organo-metal compounds.

U.S. Patent No. 4,254,012 to Green discloses cyanate ester resins curable by a first UV light exposure and a second heat treatment. The compositions include polymeric cyanate ester resins; photopolymerizable compounds, such as acrylate esters; and heat activated catalysts such as Lewis acids, proton acids, bases, e.g., trimethylamine, phosphorous compounds, e.g., tributyl-phosphane, and organo-metals, e.g., zinc octanoate. The compositions also include a photoactivated polymerization catalyst such as an organic peroxide, a benzophenone, an acetophenone or other related photoinitiator or photosensitizer. The Green compositions are useful as coatings and may be adapted to filament winding.

U.S. Patent Nos. 4,546,131, 4,559,399, 4,611,022 to Hefner, Jr., disclose thermosettable cyanate ester resin compositions comprising cyanate esters, epoxy compounds, and acrylates. These thermosettable composition also disclose thermally activated catalysts such as organic peroxides, various bases, "onium" salts, and trimerization catalysts such as organo-cobalt compounds. The Hefner, Jr. compositions may be adapted to filament winding applications. These compositions are not, however, adapted to UV light curing processes. Nor are the disclosed organic peroxides described as useful as heat-activated catalysts for improving the resistance of the compositions to dripping during heating.

The European Patent Application No. EP 266,986 to Amoco Corp. describes thermally cured resin compositions including cyanate esters, epoxy resins, and a thermoplastic polymer. Preferred cyanates are the cyanates of bisphenols. Preferred epoxies are polyglycidyl derivatives of phenols, novolaks, amines, and esters of carboxylic acids. The thermoplastic polymer may be either a polyacrylate or a polyetherimide. The compositions may also include bismaleimides for further polymerization with the resins. Thermally activated catalysts and accelerators described as useful for the resins include tertiary amines, phenols and transition metal organo-metal complexes. When bismaleimides are used, organic peroxides are described as preferred catalysts, but no disclosure is given regarding any class of peroxides useful for preventing drip during heat curing. The Gardner et al. resins may be adapted to filament winding. The Gardner et al. compositions, however, do not include acrylate type compounds and are not adapted to actinic light curing processes.

European Patent Document No. EP 347,800 to Mitsubishi Gas Chemical Co. Inc. discloses cyanate ester resin compositions including at least one acrylic resin, a saturated polyester or epoxy resin, an aromatic polycyanate, and a curing catalyst. Preferred epoxies include bisphenol type epoxies. The disclosed catalysts include organic peroxides, tertiary amines, phenols, anhydrides, and organo-metal salts as the preferred salts. The Mitsubishi compositions are described for coatings applications, but are not described as applicable to filament winding applications.
Furthermore, the Mitsubishi compositions are not adapted to actinic radiation curing processes.

PCT Document No. WO 92/03516 to 3M Company describes single or dual cured adhesive compositions comprising at least one cyanate ester, a thermoplastic polymer, and an organo-metallic catalyst. The compositions may also include a silane coupling agent having an epoxy, glycidoxy, acrylic, amino or other hydrolyzable group. Preferred cyanates include cyanates of bisphenols and novolaks. Preferred thermoplastic polymers include polyesters, polyimides, and polyvinyls, including polyacrylates. The organo-metal catalysts disclosed in this document may be either heat activated or actinic light activated. The 3M patent document does not, however, disclose the use of an ultraviolet sensitive photoinitiator. Nor does the 3M patent document include epoxy type compounds except for the linkage of epoxy functionalities to the silane agents used for coupling the resin to a substrate. These compositions also are not adapted to filament winding operations.

A publication by Ising et al., entitled "Cyanate Cured Behavior and the Effect on Physical and Performance Properties", Third International SAMPE Electronics Conference, 360-370 (1989), discloses thermally cured resin compositions comprising cyanate esters, a bisphenol A epoxy resin, and an organo-metal catalyst. The Ising et al. compositions do not include acrylates and are not adapted to actinic light curing processes, having no actinic light sensitive component. These compositions also are not adapted for filament winding, but are described as useful for castings and laminates.

An anonymous publication entitled "Uncured Resin Mixture of Cyanate Ester Resin and Epoxy Resin Modified with Particulate Elastomer and Polymeric Material Prepared Therefrom" (1991), discloses thermosetting resin compositions including a polyaromatic cyanate ester, an epoxy resin, such as DGEBA, and an insoluble elastomeric particulate. The insoluble elastomeric particulate may include polyacrylates dispersed in a liquid diglycidyl ether of bisphenol A (DGEBA). Curing agents for these compositions include organo-cobalt compounds. These compositions are not adapted to actinic light curing processes and contain no photoinitiators. These resins may be reinforced with fibers, but are not described as useful for filament winding applications.

A publication by Shimp et al., entitled "Cyanate Ester-Cured Epoxy Resin Structural Composites" 37th International SAMPE Symposium, 293-305 (1992), provides a theoretical description of reaction pathways of cyanate-epoxy resin compositions. Shimp et al. also describe preparation methods for cyanate-epoxy compositions. Useful epoxies are described as including DGEBA, and the disclosed cyanates include bisphenol dicyanates. Disclosed catalysts include organo-titanate and organo-cuprate compounds. The Shimp et al. publication discloses resins that are curable by heat, but does not disclose any compositions curable by actinic radiation. The compositions of the Shimp et al. publication are described as adapted to various processes including filament winding.

None of the aforementioned patents disclose dual-curing filament winding or prepreg resin compositions resistant to the resin sag and drip caused by heat curing. Other measures have generally been needed including spraying a curing agent onto an uncured wound article, e.g., U.S. Patent No. 3,937,833 to Gruenwald or, more commonly, requiring that the wound article be rotated during the heat cure.

European Patent Application No. 0412588 A2 discloses resin compositions that can be used for manufacturing an epoxy prepreg. This publication is not directed to filament winding incorporating a resin. The composition includes an unsaturated component and a monomer reactive with the unsaturated component by a catalyst having a working range at a temperature below about 40°C, and an epoxy resin and a monomer reactive with the epoxy resin by a catalyst having a working range above 40°C. Such a composition does not necessarily provide for efficient curing of the unsaturated component in order to prevent resin drip without continuous rotation during a later heat curing.
Therefore, it would be a significant advance in the art to provide resin compositions, and methods of using such compositions, capable of overcoming the above-described difficulties associated with filament winding processes, in a manner which would obviate the use of additional curing steps and long rotation periods heretofore necessary to obtain quality composites having uniform characteristics.

The present invention solves the disadvantages inherent in the prior art by using compositions that maintain stable low pot-life viscosities and/or low shelf-life viscosities for a significant period of time such that commercial filament winding processes are practicable. The compositions also exhibit relatively high glass transition temperatures and are intended to be useful in high temperature applications. Unexpectedly, the resin compositions allow uniform properties of the cured product to be obtained without drip or excessive flow of the resin during the heat-cure stage.

Accordingly, it is an object of the present invention to provide an improved process for forming fiber/resin composites.

It is a further object of the invention to provide an improved process for filament winding which overcomes the above-described deficiencies of the prior art practice of these processes.

It is another object of the invention to provide filament wound articles which are readily and economically formed, and which are rapidly processed for subsequent handling, packaging, or other processing operations.

Other objects and advantages of the present invention will be more fully apparent from the ensuing disclosure and appended claims.

### SUMMARY OF THE INVENTION

These and other objects of the inventions are achieved by a process for forming fiber resin composites as claimed in claim 1. Preferred embodiments and modifications of the process of the invention are disclosed in dependent claims 2 to 44.

In one aspect, the present invention relates to the use of specific resin compositions for filament winding applications, the compositions comprising an epoxy component including at least, one polyepoxide resin curable by heat, an olefinically unsaturated monomer component including at least one polyolefinically unsaturated monomer curable by actinic radiation, at least one photoinitiator at least one organic peroxide and at least one heat activated curing agent.

The resin compositions include an organic peroxide selected from the group of organic peroxides having 10 hour decomposition half lives at temperatures of from about 50 °C to less than about 104°C. Peroxides outside of the upper range have generally not been found to be effective at preventing resin drip. In general, useful peroxides include diacyl peroxides, peroxydicarbonates, paroxyesters, and peroxyketals. Mixtures of peroxides are also contemplated.

Polyepoxide resins useful in the process of the present invention may be selected from the classes consisting of polyglycidyl and poly(β-methylglycidyl)ethers of dihydric and polyhydric alcohols and phenols, novolaks, alkyl-substituted phenols and halogen-substituted phenols; poly(N-glycidyl) compounds obtained from amines containing at least 2 amino-hydrogen atoms; triglycidylisocyanurate; N,N' -diglycidyl derivatives of cyclic alkaline ureas and hydantoins; and poly(S-glycidyl) derivatives of dithiols. Mixtures of these resins are also useful.

The compositions contain at least one polyoletinically unsaturated monomer selected from the group consisting of acrylic and methacrylic resins, vinyl monomers, and unsaturated polyester solubilized in vinyl monomers. The compositions may also include one or more mono-olefinically unsaturated monomers useful as diluents.

Useful photoinitiators include benzophenone and substituted benzophenones, acetophenone and substituted acetophenones, benzoin and its alkyl ethers, xanthone and substituted xanthones, camphoroquinone peroxyesters, and 9-fluorene carboxylic acid peroxyesters. Mixtures of these compounds may be employed.

If desired, the resin compositions may further include a cyanate ester component, including at least one cyanate ester compound. Such compositions therefore include an epoxy component, including at least one polyepoxide resin curable by heat; an olefinically unsaturated monomer component, including at least one polyolefinically unsaturated monomer curable by actinic radiation; a cyanate ester component, including at least one compound having at least two cyanate (-OCN) functional groups; at least one organic peroxide; at least one photoinitiator; and at least one heat activated curing agent.

Useful cyanate ester components include single cyanate esters or mixtures thereof. Cyanate esters may be monomeric, oligomeric, or polymeric, with at least one cyanate ester compound in the composition having at least two cyanate ester functional groups (-OCN) per molecule. Such cyanate esters may include polyaromatic cyanate esters, such as cyanate esters of bisphenols or cyanate esters of polymeric dicyclopentadiene structures.

The resins contain at least one heat activated curing agent. In one aspect, the curing agent is a heat activated curing agent for epoxides, preferably an amine-containing compound or an anhydride.

When amine-containing curing agents are employed they may be selected from the group consisting of dicyandiamides, boron trifluoride:amine complexes, boron trichloride:amine complexes, latent amine curatives, tertiary amines, aromatic polyamines, and imidazoles. Mixtures of curing agents are also contemplated.

Alternatively, the resins may contain a polycarboxylic acid anhydride heat activated curing agent. The anhydride curing agents are generally employed in combination with a minor amount of an amine-containing accelerator for increased cure speed. When the anhydride curing agent is used, the accelerator may also be selected from the group consisting of dicyandiamides, boron trifluoride:amine complexes, boron trichloride:amine complexes, latent amine curatives, tertiary amines, aromatic polyamines, and imidazoles.

The amine and anhydride resin compositions of the present invention have an initial viscosity from 300 to 2000 centipoise (cps), and are capable of retaining substantially the same viscosity for at least 2 hours, and preferably about 4 to 8 hours, more preferably for at least 6 hours at temperatures ranging from about ambient temperature up to 60°C. On being exposed to actinic radiation the compositions are capable of being immobilized to a gelled state which will resist substantial resin drip during the heat cure process.

When the resin compositions contain a cyanate ester, a heat activated curing agent including a heat activated carrier agent for cyanate esters is used. Heat activated catalysts useful for the cyanate esters include the group consisting of inorganic and organic metal salts dissolved in hydroxyl group-containing organic compounds such as phenols and bisphenols ("phenolic compounds").

The cyanate ester compositions have an initial viscosity of less than 2000 centipoise (cps), and are capable of retaining substantially the same viscosity for at least 6 months at about ambient temperature, i.e., at temperatures below 50°C, preferably from 20° C to 30°C. On being exposed to actinic radiation the compositions are capable of being immobilized to a galled state which will resist substantial resin drip during the subsequent heat cure process.

In one aspect, the present invention is directed to a process for producing fiber/resin composites comprising a fiber substrate and a dual-cured resin composition. The resin composition will comprise at least one polyepoxide resin curable by heat, at least one polyolefinically unsaturated monomer which when subjected to sufficient actinic radiation immobilizes the polyepoxide resin, a photoinitiator, an organic peroxide having a 10 hour decomposition half life at a temperature of from about 50°C to lees than about 104°C, and at least one heat activated curing agent for epoxides. In this process the fiber resin composite is initially cured by exposure to actinic radiation sufficient to immobilize the polyepoxide resin so that the resin exhibits no resin drip when subjected to a further heat cure step.

In another aspect, the present invention provides a process for producing fiber/resin composites, by :- applying a liquid resin, having a viscosity of about 2000 centipoise (cps) or less and a pot-life of at least 2 hours, and preferably 4 to 8 hours, at temperatures ranging from ambient temperature to 60°C, to a fiber, subjecting the fiber/resin composite to actinic radiation sufficient to permanently immobilize the resin, and then subjecting the fiber resin composite to heat sufficient to cure the resin. The resin composition comprises a heat curable polyepoxide resin, an actinic radiation curable polyolefinically unsaturated monomer, a photoinitiator, an organic peroxide having a 10 hour decomposition half life at a temperature of from 50°C to less than 104°C and a heat activated curing agent for epoxides.

In still another aspect, the present invention includes a process for producing fiber/resin composites comprising a fiber substrate and a dual-cured resin composition. The resin composition will comprise at least one polyepoxide resin curable by heat, at least one polyolefinically unsaturated monomer which when subjected to sufficient actinic radiation immobilizes the polyepoxide resin, at least one cyanate ester, at least one organic peroxide, at least one photoinitiator, and at least one heat activated curing agent for the cyanate ester. In this process, the fiber resin composite is initially cured by exposure to actinic radiation sufficient to immobilize the polyepoxide resin so that the resin exhibits no resin drip when subjected to a further heat cure step.

In another aspect, the present invention provides a process for producing fiber/resin composites, by :- applying a liquid resin, having a viscosity of about 2000 centipoise (cps) or less and a shelf-life of at least 6 months at ambient temperature, to a fiber, subjecting the fiber/resin composite to actinic radiation sufficient to permanently immobilize the resin, and then subjecting the fiber resin composite to heat sufficient to cure the resin. The resin composition comprises a heat curable polyepoxide resin, an actinic radiation curable polyolefinically unsaturated monomer, a cyanate ester, an organic peroxide, a photoinitiator, and a heat activated curing agent for the cyanate ester.

### DETAILED DESCRIPTION

Product articles according to the present invention may be made by any of a wide variety of fiber/resin composite forming methods, including those utilized in forming fiber/resin matrices comprising discontinuous fibers. For example, lay-up techniques, sheet molding, resin transfer moldings, as well as methods applicable to the use of continuous filament, such as filament winding, braiding, and pultrusion may be used. Further, fiber/resin composite articles may be formed by a combination of these methods, such as where a solid rod is formed by pultrusion and subsequently used as the core body for filament winding.

In one preferred embodiment, the articles produced according to the invention may comprise a filament array of substantially parallelly aligned, laterally continuous filaments which have been impregnated with the resin compositions of the invention and subjected to actinic radiation curingly effective for the actinic radiation curable resin component of the composition.

As used herein, the term "laterally continuous", when used to describe filament arrays of parallelly aligned filaments, means that the adjacent filaments in the parallelly aligned array have the resin composition between their facing surfaces, without gross voids, spaces, or discontinuities therebetween. The resin composition possesses sufficient flow characteristics, as distinct from drip or sag, to uniformly bind adjacent filaments together.

In producing filament wound articles according to the present invention, wherein the filaments are treated, i.e., coated or impregnated, with the resin composition, the actinic radiation may be applied to the filament prior to, simultaneously with, or subsequent to winding of the treated filament onto the substrate mandrel. Such concurrent actinic irradiation of the resin borne on the filament facilitates a high degree of processing flexibility in the fabrication of such filament wound articles. In this manner, winding of articles of substantially irregular shape is facilitated because irradiating impregnated fibers prior to substrate contact can impart sufficient adhesive and tack qualities to cause the fiber to adhere to the substrate and/or each other while passing over areas where slippage would normally occur. Thus, in some instances, it may be advantageous to irradiate the impregnated filament prior to its application by winding onto the substrate. Alternatively it may be desirable to filament wind the mandrel, and subsequently to irradiate the wound article.

Similarly, in the pultrusion formation of filament articles according to the present invention, an array of parallelly aligned filaments is pultruded through a die imparting a selected cross-sectional shape thereto, the filament having been impregnated with the resin composition of the invention. The resulting shaped filament array is subjected to curingly effective actinic radiation concurrently with its passage through the die. Such concurrent irradiation may be effected either prior to or subsequent to passage of the filament array through the die, insofar as the ultimate shape is imparted somewhat upstream of the die in proximity to the forming die openings. In a specific application, the particular placement and operation of the actinic radiation source for effectuating curing will be readily determinable by those skilled in the art without undue experimentation.

The use of UV light provides significant processing and handling advantages during manufacture by instantly immobilizing the resin. Immobilization of the resin is controlled to provide sufficient gelation to prevent flow out of the part but allow good wetting between layers, thus assuring even resin distribution, reduced void formation and ease of handling of the finished part without resin migration, sagging or dripping. The rapid gelation stage, in most cases, also eases handling during the heat-cure.

Advantages of the present invention include elimination of runs, drips, migration, and resin-rich/resin-poor areas; curing of the resin while parts are stationary, i.e., no requirement for rotation; a process which yields even resin distribution, reduced voids, lessens clean up and reduces resin usage and waste; and the low initial viscosity promotes exceptionally fast filling of parts and composite structures which can be rapidly controlled by UV radiation.

The filament winding processes used with the present compositions are for the most part continuous processes. Typically, the resin composition is housed in an open vessel beneath a rotating roller. The rotating roller is partially submerged in the resin so as to coat the roller as it rotates. Fiber is drawn from a spool and directed through the resin and into contact with the roller surface, whereby the fiber is coated with resin as it passes. Actinic radiation is directed at the coated fiber as it leaves the roller, thereby gelling and immobilizing the resin. The gelled resin is wound on a mandrel, as previously described, and may be further cured, if desired or necessary, by actinic radiation prior to heat cure.

It should be noted that, because of the continuous nature of these processes, the resins must exhibit stable low viscosities, i.e., they must exhibit extended pot-lives. In many conventional resins, pot-life tends to be disadvantageously short, e.g., on the order of minutes or hours. Among the advantages of the resins of the present invention is that the resins have low viscosities for extended periods. As a result, not only do the resins exhibit the necessary excellent pot-life, but they also exhibit excellent storage characteristics, i.e., shelf-life. For example, the shelf-life of the cyanate ester compositions of the invention is essentially unlimited as long as the resins are protected from excessive temperatures and excessive exposure to other forms of energy, e.g., ultraviolet light, capable of affecting resin components.

Those compositions of the present invention which contain cyanate esters and heat activated curing agents therefor are intended to be formulated and used as one part systems. Thus, no mixture of components prior to use is required and these compositions have virtually unlimited shelf life, as well as excellent pot life as previously discussed. Those compositions which do not contain cyanate esters are intended to be used as two part systems. One part contains the epoxy component and the other part contains the curing component, The two components are mixed prior to use. As previously mentioned, separately the two components have virtually unlimited shelf life. When mixed, the pot life must meet the requirements previously discussed.

When the cyanate esters are not present, the heat activated curing agents are amines and anhydrides or mixtures thereof. When the anhydride is used, an anhydride accelerator is generally present. In those compositions where the cyanate ester is present, the heat activated curing agent is an inorganic or organic metal salt, a phenolic compound such as a phenol or bisphenol or mixtures of the salts and phenolic compounds. For example, in a preferred embodiment, the inorganic or organic metal salt is dissolved in the phenolic compound and this solution or mixture is used as the curing agent.

Subsequent to winding, the formed article is placed in an oven at an appropriate cure temperature. In general, the amine and anhydride compositions of the present invention can substantially reach a fully cured state by heat curing at 150°C to 200°C for two to four hours. Moreover, in general, the cyanate ester compositions can substantially reach a fully cured state by heat curing at 150°C to 250°C for about one to eight hours. It will be appreciated by those skilled in the art that the time and temperature of the heat cure may be varied to reach particular desired results.

The dual curing filament winding resins are formulated with the aforementioned polyolefinically unsaturated monomers, and preferably polyacrylate monomers, that form a cross-linked gel upon exposure to actinic radiation, and preferably UV light. This cross-linking prevents resin dripping from the part during the winding and during the heat cure. However, when certain fibers are employed that screen UV light, such as graphite or Kevlar, or when using high winding speeds with most fibers, a portion of the acrylate can remain uncured after exposure to UV light. Thus, although the resin does not drip off the part during filament winding, it may tend to drip during- the heat-cure cycle unless appropriate measures are taken to reduce the flowability of, the resin.

The degree of gelation of a given resin composition will largely depend on the amount and type of actinic radiation to which it is exposed. Exposure time is easily controllable, as is the intensity and type of radiation. These parameters are easily determinable by one reasonably skilled in the art, and may vary in accordance with the choice of resin composition, fiber substrate and type of product desired. Single or multiple actinic sources, for example UV light, may be focused on the resin coated fiber to effectuate gelation. The winding speed can also be closely controlled, thereby controlling the duration of exposure of the resin coated fiber to the beam of radiation. In certain commercial applications, winding speeds of about 30.5 cm/second (12 inches second) to about 50.8 cm/second (20 inches/second) are useful. Radiation intensities of, for example UV light, may be from about 120 milliwatts/cm² to about 180 milliwatts/cm². In certain commercial applications, winding speeds of about 15.2 cm/second (6 inches/second) to about 76.2 cm/second (30 inches/second) are useful. Radiation intensities of, for example, UV light, may be from about 120 milliwatts/cm² to about 500 milliwatts/cm². Other winding speeds and intensities of light may easily be chosen by those skilled in the art.

In addition, the dilution of the polyolefinically unsaturated portion of the composition by the unreacted epoxy system, and the increased viscosity that occurs upon gelation, together can reduce the degree of vinyl reaction relative to a 100 wt.% vinyl composition, further impeding the thoroughness of the cross-linking and reducing the resin's capacity to resist dripping when heated.

The inclusion of a thermally activated radical source, i.e., a peroxide, will tend to increase the extent of the vinyl reaction as the composition is heated. One effect of a more complete vinyl reaction is to compensate for the decreased viscosity that occurs as the composition heats up to the heat cure onset temperature of the major components (usually a heat-curing epoxy system). Another effect is to compensate for possible inadequacies in the geometry of the actinic cure step where exposure of the resin to the actinic source(s) is not optimal. The peroxide enables the further extension of the gelation of the resin to any portions of the resin which are less fully exposed to the actinic source. The intent is to retain a tacky, relatively soft gel during the application stage, so as to improve adhesion and facilitate handling during fabrication, while at the same time producing a composition which will not drip during the curing heat-up stage.

While not wishing to be bound by any one theory, applicants believe that the peroxide plays a role in the reaction of unreacted vinyl groups trapped in the epoxy resin diluted gel formed during the irradiation stage. Normally, it would be expected that these groups might thermally polymerize during the final high temperature epoxy cure. It is possible, however, that the more extensive vinyl polymerization at a lower temperature, produced by initiation using a suitable peroxide, leads to a stronger structure when the anhydride-hydroxyl reaction takes over in the case of the anhydride curing compositions. Alternatively, the peroxide may be producing direct vinyl bonding to the cured epoxy by abstraction on epoxy compounds followed by vinyl addition to the new radical sites.

As was discussed above, the resin component of partially cured filament wound articles will tend to drip upon heating, generally requiring the rotation of the articles during heat curing to avoid anisotropies. For example, AMINE CURING resin formulations, in accordance with the present invention but containing no peroxide, were used to form composite articles as described elsewhere herein. Articles were formed by filament winding onto mandrels to which thermocouples had been attached, and the rise in temperature of the article during heat cure was then correlated with the onset of resin drip.

It was observed that the onset of the drip of the resins of the present invention will occur, in the absence of peroxide, generally in the range of from about 80°C to about 100°C, depending upon the composition of the resin. The peroxide chosen for use in any particular resin formulation will therefore depend in part on the resin drip onset temperature of the formulation. To be useful for the present invention, the peroxide selected must provide sufficient additional cross-linking of the gel to offset any decrease in resin viscosity that would otherwise occur during the heat-up process. In addition, for the benefit of the peroxide to be obtained, the offsetting cross-linking induced by the thermally activated peroxide must occur at a temperature below or near the temperature at which the drip phenomenon begins. Because the decomposition of each peroxide is expressed as a ten hour half-life function of temperature, a peroxide will begin to decompose at temperatures below its ten hour half-life temperature (T_{½}). The peroxide can therefore begin to cross-link the gelled resin before the temperature rises sufficiently to otherwise cause the resin to drip. In general, the peroxides useful in the present invention will have a T_{½}less than 104°C. Peroxides having T_{½}'s of 104°C or greater generally have not been found to be useful in the resins of the invention. It is believed that such peroxides do not generate sufficient cross-linking of the gel until after resin drip has begun during the heat-up process.

Thus, a range of dual-curing epoxy/polyolefinically unsaturated formulations has been developed. These compositions are designed to form a soft gel which allows for interlayer wetting when exposed to UV radiation. The compositions are further designed to retain their non-flow properties during the heat-up stage of heat-curing by producing additional immobilizing cross-linking during the heat-up. This is accomplished by means of a thermally activated radical source in the formulation, namely the class of peroxides described herein.

A peroxide, which decomposes on heating to form radicals is added to the formulation to initiate the polymerization of any unreacted polyolefinically unsaturated monomer. The choice of peroxide is critical to prevent dripping during heat-cure. The peroxide must possess a 10 hour half-life decomposition temperature of less than 104°C. A peroxide with a higher value decomposes too slowly and the polyolefin does not polymerize sufficiently to prevent dripping during the heat-cure.

A preferred class of compositions of the present invention are the "amine curing resins". These amine curing resins are created by mixing an epoxy resin component comprising at least one polyepoxide, a polyolefinic component including at least one polyacrylate, a photoinitiator and a peroxide, with a curing component comprising an amine-containing heat activated curing agent. Separately, the two components (epoxy component and curing component) of the amine curing resins have essentially unlimited shelf life. When mixed, the compositions can retain a usable viscosity (pot-life) i.e., less than 2000 centipoise (cps), for a minimum of 2 and preferably 4 to 8 hours at temperatures ranging from ambient temperature to 60°C. The amine curing resin compositions have a T_{g} in the range of 110°C to 160°C when fully cured.

The amine curing resins of the present invention have an epoxy component present in an amount ranging from 60 wt.% to 85 wt.%, and preferably, 63 wt.% to 75 wt.%; a polyolefinic component present in an amount ranging from 5 wt.% to 30 wt.%, and preferably from 10 wt.% to 20 wt.% of the composition. Most preferably the polyolefin component is present at about 15 wt.% of the composition. The amine-containing heat activated curing agent is generally present in an amount ranging from 2 wt.% to 10 wt.%, and preferably from 3 wt.% to 6 wt.%. Most preferably the heat activated curing agent is present in an amount of about 5.5 wt.%. The photoinitiator is generally present in an amount ranging from 1 wt.% to 10 wt.%, and most preferably from 2 wt.% to 5 wt.%. The free radical initiator (organic peroxide) is present in an amount ranging from 0.2 wt.% to 2 wt.%, preferably from 0.5 wt.% to 1.5 wt.%. Miscellaneous additives such as wetting and defoaming agents can be added collectively in amounts of 0.5 to 1% by weight of the composition, added as part of the resin component. Optionally, fire retardant materials such as phosphorous-containing compounds may be present in amounts of 2% to 10%, and preferably 3% to 5% by weight of the composition.

Another preferred class of compositions of the present invention are the "anhydride curing resins". These compositions comprise a mixture of an epoxy resin component including at least one polyepoxide, a polyolefinic component including at least one polyacrylate, a photoinitiator, and a peroxide, with a curing component comprising a carboxylic acid anhydride and an anhydride accelerator. The anhydride curing compositions exhibit a T_{g} of from about 110 °C to about 160°C when fully cured. The anhydride curing compositions also genarally exhibit lower viscosities than the amine curing resins of the present invention. Because the reaction between the epoxy and the anhydride in inherently slower than with amine curing agent, the anhydride curing resins nave a greater pot-life capability, e.g., at least a 24 hour pot-life.

In the anhydride curing compositions, the epoxy component may be present in amounts ranging from 37 wt.% to 48 wt.% of the composition, most preferably from 40 wt.% to 45 wt.% of the composition. The anhydride component may be present in amounts ranging from 33 wt.% to 43 wt.%, most preferably from 36 wt.% to 41 wt.% of the composition. The anhydride accelerator may be present in an amount of 0.1 wt.% to 5.0 wt.%; preferably in an amount of 1.0 wt.% to 2.0 wt.t. The polyolefinic component may be present in an amount ranging from 10 wt,% to 30 wt.%, preferably from 10 wt.% to 20 wt.% and most preferably 12 wt.% to 15 wt.%. The photoinitiator is present in an amount ranging from 1 wt.% to 10 wt.%, and preferably from 1.5 wt.% to 5 wt.%. The free radical initiator (organic peroxide) may be present in amounts ranging from 0.2 wt.% to 2 wt.%, and preferably from 0.3 wt.% to 1 wt.%.

Another preferred class of compostions are the "cyanate ester resins", which comprise a mixture of an epoxy resin component comprising at least one polyepoxide, a cyanate e opponent comprising at least one compound having at least two cyanate ester functional groups per molecule, a polyolefinic component including at least one polyacrylate, a photoinitiator, an organic peroxide, and a heat activated curing agent for cyanate esters. The preferred resins have essentially unlimited shelf life, retaining a usable viscosity, i.e., less than 2000 centipoise (cps). for a minimum of 6 months at ambient temperature, i.e., at temperatures below 50°C, preferably from 20°C to 30°C. The resin compositions have a glass transition temperature (Tg) in the range of 150°C to 200°C when fully cured.

The cyanate ester resin compositions of the present invention have an epoxy component present in an amount ranging from 25 wt.% to 50 wt.%, and preferably, from 30 wt.% to 40 wt.%; a cyanate ester component present in an amount ranging from 25 wt.% to 50 wt.%, and preferably, from 30 wt.% to 40 wt.%; a polyolefinic component present in an amount ranging from 5 wt.% to 30 wt.%, and preferably, from 15 wt.% to 25 wt.% of the composition. Most preferably the polyolefin component is present at about 20 wt.% of the composition. The heat activated curing agent is generally present in an amount of from 0.01 wt.% to 6.0 wt.%. The preferred heat activated curing agent is a solution of an organo-metal component in a phenolic component. The organo-metal component of the heat activated curing agent is generally present in the resin composition in an amount of from 0.01 wt.% to 1.0 wt.%, and preferably, from 0.05 wt.% to 0.2 wt.%. The phenolic component of the heat activated curing agent may be included in the resin composition in an amount of from 0.1 wt.% to 10.0 wt.%, and preferably, from 0.5 wt.% to 1.5 wt.%. The photoinitiator is generally present in an amount ranging from 1 wt.% to 10 wt.%, and most preferably from 2 wt.% to 5 wt.%. The free radical initiator (organic peroxide) is present in an amount ranging from 0.2 wt.% to 2 wt.%, and preferably from 0.5 wt.% to 1.5 wt.%.

Miscellaneous additives such as wetting and defoaming agents can be added collectively to the resin compositions in amounts of 0.5 to 1% by weight of the composition, added as part of the resin component. Optionally, fire retardant materials such as phosphorous-containing compounds may be present in amounts of 2% to 10%, and preferably 3% to 5% by weight of the composition.

Epoxy resins useful in the compositions of the present invention include polyepoxides curable by elevated temperature. Examples of these polyepoxides include polyglycidyl and poly(β-methylglycidyl) ethers obtainable by reaction of a compound containing at least two free alcoholic hydroxyl and/or phenolic hydroxyl groups per molecule with the appropriate epichlorohydrin under alkaline conditions or, alternatively, in the presence of an acidic catalyst and subsequent treatment with alkali. These ethers may be made from acyclic alcohols such as ethylene glycol, diethylene glycol, and higher poly(oxyethylene) glycols, propane-1,2-diol and poly(oxypropylene) glycols, propane-1,3-diol, butane-1,4-diol, poly(oxytetramethylene) glycols, pentane-1,5-diol, hexane-2,4,6-triol, glycerol, 1,1,1-trimethylolpropane, pentaerythritol, sorbitol, and poly(epichlorohydrin); from cycloaliphatic alcohols such as resorcinol, quinitol, bis (4-hydroxycyclohexyl)methane, 2,2-bis(4-hydroxycyclohexyl)propane, and 1, 1-bis(hydroxymethyl)cyclohex-3-ene; and from alcohols having aromatic nuclei, such as N,N-his(2-hydroxyethyl)aniline and p,p'-bis(2-bydroxyethylamino) diphenylmethane. Or they may be made from mononuclear phenols, such as resorcinol and hydroquinone, and from polynuclear phenols, such as his (4-hydroxyphenyl)methane, 4,4'-dihydroxydiphenyl, bis(4-hydroxyphenyl) sulphone, 1,1,2,2-tetrabis(4-hydroxyphenyl)ethane, 2,2,-bis(4-hydroxyphenyl)propane (otherwise known as bisphenol A), 2,2-his(3,5-dibromo-4-hydroxyphenyl)propane, and novolaks formed from aldehydes such as formaldehyde, acetaldehyde, chloral, and furfuraldehyde, with phenols such as phenol itself, and phenols substituted in the ring by chlorine atoms or by alkyl groups each containing up to nine carbon atoms, such as 4-chlorophenol, 2-methylphenol, and 4-t-butylphenol.

Poly(N-glycidyl) compounds include, for example, those obtained by dehydrochlorination of the reaction products of epichlorohydrin with amines containing at least two amino-hydrogen atoms, such as aniline, n-butylamine, his(4-aminophenyl)methane, and bis(4-methylaminophenyl) methane; triglycidyl isocyanurate; and N,N'-diglycidyl derivatives of cyclic alkylene ureas, such as ethyleneurea and 1,3-propyleneureas, and of hydantoins such as 5,5-dimethylhydantoin.

Epoxide resins having the 1,2-epoxide groups attached to different kinds of hetero atoms may be employed, e.g., the N,N,O-triglycidyl derivative of 4-aminophenol, the glycidyl ether-glycidyl ester of salicylic acid, N-glycidyl-N' - (2-glycidyloxypropyl) -5,5-dimethylhydantoin, and 2-glycydyloxy-1,3-bis(5,5-dimethyl-1-glycidylhydantoin-3-yl)propane.

Such epoxies are available from a variety of commercial sources, such as the EPON series from Shell Chemical Co., the EPI-REZ series from Rhône-Poulenc, the Araldite series from Ciba-Geigy, the D.E.R. series from Dow Chemical Co., and the EPOTUF series from Reichhold.

Also useful are halogenated epoxy resins such as the brominated epoxides available from the sources shown above. Halogenated epoxy resins in combination with other fire retardant materials may be suitable for use as fire retardant additives in the compositions of the present invention.

Especially preferred epoxy resins useful in the present invention are the diglycidyl ethers of bisphenol A marketed under the tradenames EPON 825 and EPON 828 available from Shell Chemical Co., D.E.R. 331 and 332 available from Dow Chemical Co., and the cycloaliphatic epoxy resin marketed as ERL-4221 by Union Carbide Co.

Various epoxies such as the glycidyl ethers marketed as the EPODIL series by Pacific Anchor Chemical Corporation, a division of Air Products and Chemicals Inc., may be added as epoxy diluents, to reduce the viscosities of the resins of the present invention.

Other compounds having 1,2 epoxide functionality and curable by heat may potentially be employed. Other optional epoxy compounds may be present which have both epoxy functionality and olefinically unsaturated functionality ("dual-functional" resins).

Suitable polyolefinically unsaturated components of the compositions may include poly(meth)acrylic resins, polyvinyl monomers, and polyunsaturated polyesters solubilized in vinyl monomers. As used herein, the term "(meth)acrylic" is intended to be broadly construed to include acrylic as well as methacrylic compounds, e.g., acrylic esters and methacrylic esters.

It is preferred that the polyolefinically unsaturated monomer have a low viscosity to offset the effect of any higher viscosity component so as to retain the low composition viscosity required for effective filament winding. In addition, the polyolefinically unsaturated monomer component may comprise one or more low viscosity monoolefinically unsaturated monomers as diluents, but in any event, the olefinically unsaturated monomer component must comprise at least one polyolefinically unsaturated monomer. As used herein "polyolefinically unsaturated" means having at least two olefinic double bonds. The polyolefinically unsaturated monomers may be used in amounts of 5% to 30% and preferably 10% to 20% by weight of the composition.

Polyacrylates are generally useful, including 1,3-butylene glycol diacrylate, diethylene glycol diacrylate, 1,6-hexanediol diacrylate, neopentylglycol diacrylate, polyethylene glycol diacrylate, tetraethylene glycol diacrylate, methylene glycol diacrylate, pentaerythritol tetraacrylate, tripropylene glycol diacrylate, ethoxylated bisphenol-A-diacrylate, trimethylolpropane triacrylate, di-trimethylolopropane tetraacrylate, dipenterythritol pentaacrylate, pentaerythritol triacrylate and the corresponding methacrylate compounds. Also useful are reaction products of (meth)acrylic acid and epoxide resins, and urethane resins. Suitable poly(meth)acrylic ester compounds are also described in U.S. Patent Nos. 4,051,195, 2,895,950, 3,218,305, and 3,425,988.

Useful (meth) acrylic resins include esters and amides of (meth) acrylic acid as well as comonomers thereof with other copolymerizable monomers. Esters include methyl acrylate, methyl methacrylate, hydroxy ethyl acrylate, butyl methacrylate, octyl acrylate, and 2-epoxy ethyl acrylate. Amides include bytoxymethyl acrylamide, methoacrylamide, and t-butyl acrylamide. Also suitable are copolymers of such compounds, and copolymers with other monomers containing polymerizable vinyl groups.

Another class of resins which are actinic radiation curable and potentially suitable for use in the compositions in the invention include vinyl monomers such as styrene, vinyl toluene, vinyl pyrrolidone, vinyl acetate and divinyl benzene.

A further useful class of actinic radiation curable resin materials comprises unsaturated polyesters, solubilized in vinyl monomers, as ordinarily prepared from alpha-beta ethylenically unsaturated polycarboxylic acids and polyhydric alcohols, as described for example in U.S. Patent No. 4,025,407.

Particularly preferred polyolefinically unsaturated components include trimethylolopropane trimethacrylate, trimethylolpropane triacrylate, dipentaerythritol pentaacrylate, pentaerythritol triacrylate, ethoxylated trimethylolpropane triacrylate, 1,6 hexanediol diacrylate, neopentyl glycol diacrylate, pentaerythritol tetraacrylate, and 1,3 butylene glycol diacrylate. Preferred monoacrylates include cyclohexylacrylate, 2-ethoxyethyl acrylate, 2-methoxyethyl acrylate, benzoyl acrylate, and isobornylacrylate. Such compounds are available from a variety of sources. For example, a preferred polyacrylate, dipentaerythritol monohydroxypentaacrylate is available as SR 399 from Sartomer Co.

It will be understood by those skilled in the art that any other resin compounds having such functionality in their molecules and curable under actinic radiation conditions may potentially be employed. In addition to those monomers required to be present, other optional monomers may be present which have both acrylate and epoxy functionality ("dual-functional'' monomers).

The cyanate ester component comprises at least one cyanate ester compound (monomer, oligomer, or polymer). Preferably, the cyanate ester component comprises at least one compound having two or more -OCN functional groups per molecule (for convenience referred to as "cyanate ester"). Typically, the cyanate ester has a cyanate equivalent weight of 50 to 500, preferably 50 to 250. The molecular weights of the useful cyanate ester compounds are typically in the range of 150 to 2000.

The cyanate ester component preferably includes one or more cyanate ester compounds according to Formulas I, II, or III.

Formula I is

Q(OCN)ₚ Formula I

wherein p can be an integer from 2 to 7, and wherein Q comprises at least one of: (1) a mono-, di-, tri-, or tetrasubstituted aromatic hydrocarbon containing 5 to 30 carbon atoms, and (2) a mono-, di-, tri-, or tetrasubstituted aliphatic hydrocarbon containing 1 to 5 carbon atoms, and (3) a mono-, di-, tri-, or tetrasubstituted polycyclic aliphatic hydrocarbon containing 7 to 20 carbon atoms. Optionally, (1), (2) and (3) may contain 1 to 10 heteroatoms selected from the group consisting of non-peroxidic oxygen, sulfur, non-phosphino phosphorus, non-amino nitrogen, halogen, and silicon.

Formula II is 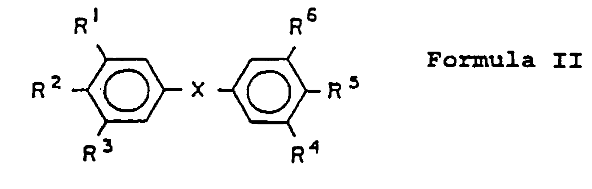 where X is a single bond, a C₁-C₄ alkylene group, -S-, or the -SO₂- group; and where R¹, R², R³, R⁴, R⁵, and R⁶ are independently -H, a C₁-C₅ alkyl group, or the cyanate ester group (-OCN), with at least two of R¹, R², R³, R⁴, R⁵, and R⁶ being the cyanate ester group. R¹, R², R³, R⁴, R⁵, and R⁶ are preferably -H, -CH₃, or the cyanate ester group.

Formula III is 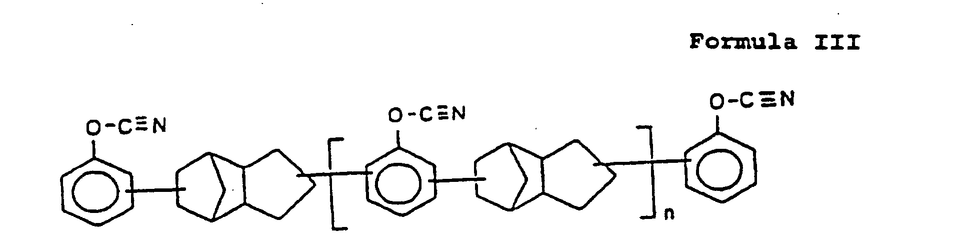 where n is 0 to 5.

The cyanate esters useful in the invention may be employed in amounts ranging from 25 wt.% to 50 wt.%. It is preferred that the cyanate esters be included in an amount of from 30 wt.% to 40 wt.%. The cyanate ester component may be present as a single cyanate ester, preferably having at least two -OCN functional groups per molecule, or as a mixture of cyanate esters, preferably including at least one dicyanate ester. Preferred cyanate esters useful in the present invention include the polyaromatic cyanate esters, such as the dicyanate esters of bisphenols. Especially preferred cyanate esters include the dicyanate esters of bisphenol A, such as the AroCy B-10 cyanate ester monomer, available from Rhone-Poulenc; the dicyanate esters of tetramethyl bisphenol F, such as AroCy M-10, available from Rhone-Poulenc; and the dicyanate esters of bisphenol E, such as AroCy L-10, also available from Rhone-Poulenc. Alternatively, a semi-solid dicyanate oligomer of bisphenol A may be employed in conjunction with a cyanate ester of lower viscosity. An especially preferred cyanate ester oligomer is the dicyanate oligomer of bisphenol A, such as the AroCy B-30 semi-solid resin, available from Rhone-Poulenc. An alternative especially preferred polycyanate resin is a polymer based on the dicyclopentadiene structure available as XU-71787.02 from Dow Chemical Co.

It will be understood by those persons having ordinary skill in the art that other cyanate ester compounds may potentially be employed.

As used herein, "actinic radiation" means electromagnetic radiation having a wavelength of about 700 nm or less which is capable, directly or indirectly, of curing the specified resin component of the resin composition. By indirect curing in this context is meant curing under such electromagnetic radiation conditions, as initiated, promoted, or otherwise mediated by another compound.

Accordingly, a photoinitiator may be added to the composition in an amount effective to respond to the actinic radiation and to initiate and induce curing of the associated resin, via substantial polymerization thereof.

Suitable photoinitiators useful with ultraviolet (UV) actinic radiation curing mono- and polyolefinic monomers include free radical generating UV initiators such as benzophenone and substituted benzophenones, acetophenone and substituted acetophenones, benzoin and its alkyl esters and xanthone and substituted xanthones. Preferred photoinitiators include diethoxy-acetophenone, benzoin methyl ether, benzoin ethyl ether, benzoin isopropyl ether, diethoxyxanthone, chloro-thio-xanthone, azo-bisisobutyronitrile, N-methyl diethanol-amine-benzophenone and mixtures thereof.

Visible light initiators include camphoroquinone peroxyester initiators and 9-fluorene carboxylic acid peroxyesters.

Particularly preferred photoinitiators include 2-hydroxy-2-methyl-1-phenyl-propan-1-one available as Darocur 1173 from EM Industries, Inc., and 2-benzyl-2-(dimethylamino) -1- [4- (4-morpholinyl)phenyl] -1-butanone available as Irgacure 369 from Ciba-Geigy.

The present invention requires the use of organic peroxides having 10 hour decomposition half-lives (10 hr. T_{½}) at temperatures of from 50°C to less than 104°C. Peroxides having 10 hour decomposition half-lives at temperatures below this range yield compositions which tend not to have stable pot-life and shelf-life characteristics. Peroxides having 10 hour decomposition half-lives at temperatures above this range, on the other hand, have generally not been found to be effective in preventing resin drip during the heat cure stage.

Useful peroxides include various diacylperoxides such as diisononanoyl peroxide, decanoyl peroxide, lauroyl peroxide, succinic acid peroxide and benzoyl peroxide.

Also useful are various peroxydicarbonates such as di(n-propyl) peroxydicarbonate, di(sec-butyl) peroxydicarbonate, and di(2-ethylhexyl) peroxydicarbonate.

Further useful peroxides include various peroxyesters such as α-cumylperoxyneodecanoate, 1,1-dimethyl-3-hydroxy-butylperoxyneoheptanoate, α-cumylperoxyneoheptanoate, t-amyl-peroxyneodecanoate, t-butylperoxyneodecanoate, t-amyl-peroxypivalate, t-butylperoxypivalate, 1-1-dimethyl-3-hydroxy-butylperoxy-2-ethylhexanoate, 2,5-dimethyl-2,5-di(2-ethyl-hexanoylperoxy) hexane, t-amylperoxy-2-ethylhexanoate, t-butylperoxy-2-ethylhexanoate, t-butylperoxyisobutyrate, t-butylperoxymaleic acid, t-butylperoxyacetate, t-amylperoxyacetate, t-amylperoxybenzoate, OO-t-butyl-O-isopropylmonoperoxycarbonate, 2,5-dimethyl-2,5-di(benzoylperoxy)hexane, OO-t-butyl-O-(2-ethylhexyl)monoperoxycarbonate, OO-t-amyl-O-(2-ethyl-hexyl)monoperoxycarbonate.

In addition, certain peroxyketals are useful in the present invention including 1,1-di(t-butylperoxy)-3,3,5-trimethyl cyclohexane, 1,1-di(t-butylperoxy)cyclohexane, and 1,1-di (t-amylperoxy)cyclohexane.

Preferred organic peroxides include lauroyl peroxide, having a 10 hr. T_{½} of 64°C; t-amylperoxy-2-ethylhexanoate, having a 10 hr. T_{½} of 75°C; and 1,1-di(t-butylperoxy)-3,3,5-trimethylhexane having a 10 hr. T_{½} of 96°C. Lauroyl peroxide is available as Alperox-F; t-amylperoxy-2-ethylhexanoate is available as Lupersol 575; and 1,1-di(t-butylperoxy)-2,2,5-trimethylhexane is available as Lupersol 256; all available from Elf Atochem North America, Inc.

Various conventional heat-activated curing agents for epoxies are useful in the present invention including imidazoles, preferably 2-ethyl-4-methyl imidazole, 1-(2-cyanomethyl)-2-ethyl-α-4-methylimidazole and 2-phenyl-4,5-dihydroxymethyl imidazole; aliphatic cycloaliphatic amines, preferably 2,2' -dimethyl-4, 4' -methylene-bis (cyclohexylamine) (Ancamine 2049); aromatic amines, preferably 4,4'-diaminodiphenyl sulfone (Ancamine S and Ancamine SP); a blend of aromatic and aliphatic amines (Ancamine 2038); Lewis Acid catalysts such as boron trifluoride:amine complexes, preferably BF₃:benzyl amine (Anchor 1907), BF₃:monoethyl amine (Anchor 1948) and liquid BF₃:amine complex (Anchor 1222); Lewis Base catalysts such as t-amines, preferably tris(dimethylaminomethyl)phenol (Ancamine K.54), dimethylaminomethyl phenol (Ancamine 1110); dicyandiamides, preferably dicyandiamide (Amicure CG). The Ancamine, Anchor, and Amicure series are tradenames for heat activated curing agents marketed by Pacific Anchor Performance Chemicals Division of Air Products and Chemicals, Inc.

Especially pertinent to the anhydride resin compositions of the present invention are the acid anhydride epoxy curing agents. These include, preferably, methyltetrahydrophthalic anhydride, methylhexahydrophthalic anhydride, chlorendic anhydride, and nadic methyl anhydride and mixtures thereof. Nadic methyl anhydride is available as AC-methyl from Anhydrides and Chemicals, Inc.

It will be noted that anhydride based catalysis of epoxy polymerization is an inherently slow process. Accordingly, the resin compositions of the present invention generally employ a minor amount of amine accelerators of the anhydride catalysis, preferably benzyl dimethylamine; 2-ethyl-4-methyl imidazole, available as Imicure EMI-24 from Pacific Anchor; and 2,4-diamino-6 [2' -methylimidazolyl- (1)'] ethyl-s-triazine isocyanurate adduct.

Catalysts useful in cyanate ester resin compositions of the present invention include heat activated catalysts capable of accelerating curing of the cyanate resin component. Examples of such catalysts include organo-metal compounds such as lead naphthenate, lead stearate, zinc naphthenate, zinc octylate, tin oleate, stannous laurate, dibutyltin maleate, manganese naphthenate, cobalt naphthenate, acetylacetone iron; inorganic metal salts such as SnCl₃, ZnCl₂, AlCl₃; phenolic compounds such as phenol, xylenol, cresol, resorcinol, catechol, fluoroglycine; and solutions of an organo-metal component, including one or more organo-metal compounds, in a phenolic component, including one or more phenolic compounds.

The heat activated catalytic agent useful for catalyzing cyanate ester resin reactions includes an organo-metal salt component dissolved in a phenolic component. In this preferred embodiment, the organo-metal component may be present in an amount of from 0.01 wt.% to 1.0 wt.% of the resin composition. It is preferred that the organo-metal component is present in an amount of from 0.05 wt.% to 0.2 wt.%. The phenolic component may be present in the resin composition in amounts ranging from 0.5 wt.% to 10 wt.%. Preferably the phenolic component is included in an amount of from 0.5 wt.% to 1.5 wt.%.

Preferred organo-metal salts include copper(II) acetyl acetonate, copper(II) naphthenate, cobalt (II) acetylacetonate, zinc(II) naphthenate, zinc (II) ethylhexanoate, manganese (II) naphthenate, and cyclopentadienyl iron(II) dicarbonyl dimer. Each of these organo-metal salts is readily available from various sources, for example Strem Chemical Corp., Newburyport, Massachusetts. Other preferred organo-metal salts include titanium bis(ethyl-3-oxobutanolato-O¹, O³) bis(2-propanolato) available as TYZOR® DC, from Dupont Co., Wilmington, Delaware; and dibutyltin (IV) dilaurate, available from Atochem North America, Inc., Buffalo, New York.

Preferred phenolic compounds include nonyl phenol, bisphenol A, cresol, phenol, and catechol, each of which is readily available from various sources, including Aldrich Chemical Co., Milwaukee, Wisconsin.

An especially preferred organo-metal salt/phenol heat activated curing agent is copper(II) naphthenate in nonyl phenol.

It will be understood by those persons having skill in the art that any other curing agents capable of heat activated curing of cyanate esters may potentially be employed.

Other additives conventionally used in the art which do not substantially interfere with the objectives of the present invention may be useful. Fillers, diluents, pigments, dyes, surface active agents and flame retardants may be employed for their intended purposes.

The procedure for making the amine curing resin compositions of the present invention may be generally described as follows: the epoxide, polyolefin, photoinitiator, and miscellaneous additives such as defoaming agents, wetting agents and, optionally, fire retardants are blended together to obtain a homogeneous mixture. Peroxide is added and the mixture is further stirred. The resin component and a heat activated curing agent such as ethylmethyl imidazole are then mixed in a proportion of about 17 parts of resin component to 1 part of the curing agent, stirred and deaerated under vacuum. The mixture is then ready for filament winding or preparation of prepreg.

The procedure for making the anhydride compositions of the present invention may be generally described as follows: the resin component is made by mixing the epoxide, polyolefin, photoinitiator, and additional miscellaneous components, such as defoaming agents, wetting agents and, optionally, fire retardants. This blend is stirred until the solution is homogeneous, e.g., approximately 10 minutes. A peroxide is added and the mixture is further stirred, e.g., for an additional 10 minutes. The anhydride component comprises a mixture of an anhydride, such as nadic methyl anhydride, and an anhydride accelerator, such as benzyldimethylamine. This mixture is stirred until homogeneous, approximately 10 minutes. The resin and anhydride components are then mixed in a proportion of about 1.6 parts of the resin component to 1 part of the anhydride component. The mixture is then further stirred and deaerated under vacuum. The composition is then ready for filament winding or for preparation of prepreg.

The procedure for making the cyanate ester resin compositions of the present invention may be generally described as follows:
Raw materials may generally be used as received, without further purification.
Solid peroxides are dissolved in the acrylate component prior to addition to the other raw materials.
Liquid resins are mixed with other liquid components until the solution is homogeneous, with the liquid peroxide or peroxide/acrylate solution added last. The mixing temperature is generally maintained below 30°C.
Solid resins, such as AroCy B-10 or AroCy B-30, are melted prior to use, and mixed with the epoxy resin at elevated temperature (80-120°C) until the mixture is homogeneous. After cooling to room temperature, the remaining components are added to the cyanate ester/epoxy solution. The liquid peroxide or peroxide/acrylate solution is added last and the mixing temperature is kept below 30°C.
The mixture is then ready for filament winding or preparation of prepreg.

Consolidation of the adjacent layers into a unitary structure requires sufficient flow of the gelled resin during the heat-cure stage to meld the adjacent filaments into an integral whole and produce a quality part. In cases where excessive UV exposure has been applied in an attempt to alleviate subsequent dripping, the acrylate matrix is too rigid to allow such flow to occur. On the other hand, if the acrylate is insufficiently exposed to actinic radiation so as to create too soft a gel, dripping during the heat-cure stage is inevitable. The immobilization of the resin by actinic radiation must produce a lattice-like matrix that has sufficient gel structure to prevent dripping, but enough flowable character to allow the merger of the respective layers into a unitary mass, during the heat cure stage.

The following examples are intended to further illustrate the present invention. Viscosities were determined by measuring 75 gram samples in a Brookfield DV I viscometer, using a 25°C water bath.

### Example 1

Amine curing resin compositions (Compositions 1-4 set forth in Table I below) were produced in accordance with the procedures of the present invention.

Filament wound articles were produced from the compositions using the general methods described above. In particular, for Compositions 1-4, articles were produced using varying intensities and locations of actinic light and varying winding speeds. Products were made using glass fiber and using carbon fiber.

Glass fiber articles were produced using two different winding speeds; 30.5 cm/sec (12 inches/sec.) and 50.8 cm/sec (20 inches/sec). At each speed, articles were produced which were exposed to one actinic radiation source, producing 120 mW/cm², focused on the mandrel onto which the fiber was wound. Articles were also produced, at each winding speed, which were exposed to two radiation sources. The first exposure was to a 180 mW/cm² source as the fiber emerged from the resin bath. The second source was the 120 mW/cm² source at the mandrel as the fiber was wound. After winding, these various articles were heat cured in an oven at 150°C for two hours. Regardless of the winding speed and the number and location of actinic sources, the resins of the present invention exhibited no drip upon heat cure. Drip was assessed by collecting resin falling from the wound article onto a collector positioned beneath the article.

Carbon fiber articles were produced in similar fashion, using one or two actinic sources. However, the intensities of the actinic radiation were greater for the relatively UV-opaque carbon fiber windings than for the relatively UV-transmissive glass fiber windings. Specifically, the source directed to the fiber on emerging from the resin bath was 450 mW/cm² and the source focused on the mandrel was 250 mW/cm². Carbon fiber articles were produced at only one winding speed, i.e. 10.2 cm/sec (4 inches/sec). Again, the articles were heat cured at 150°C for two hours. Drip was observed in only one case, i.e., Composition 4.

As is evident from Table I, Compositions 1-4 are substantially identical except for the particular peroxide used. It is apparent from the drip data that the peroxides having a 10 hour T_{½} of less than 104°C enable compositions which do not drip on heat-curing regardless of the fiber being used. Composition 4, employing t-butylperbenzoate with a 10 hour T_{½} of 104°C, is useful on glass fiber, but is less desirable when applied to carbon fiber, as evidenced by observable drip.

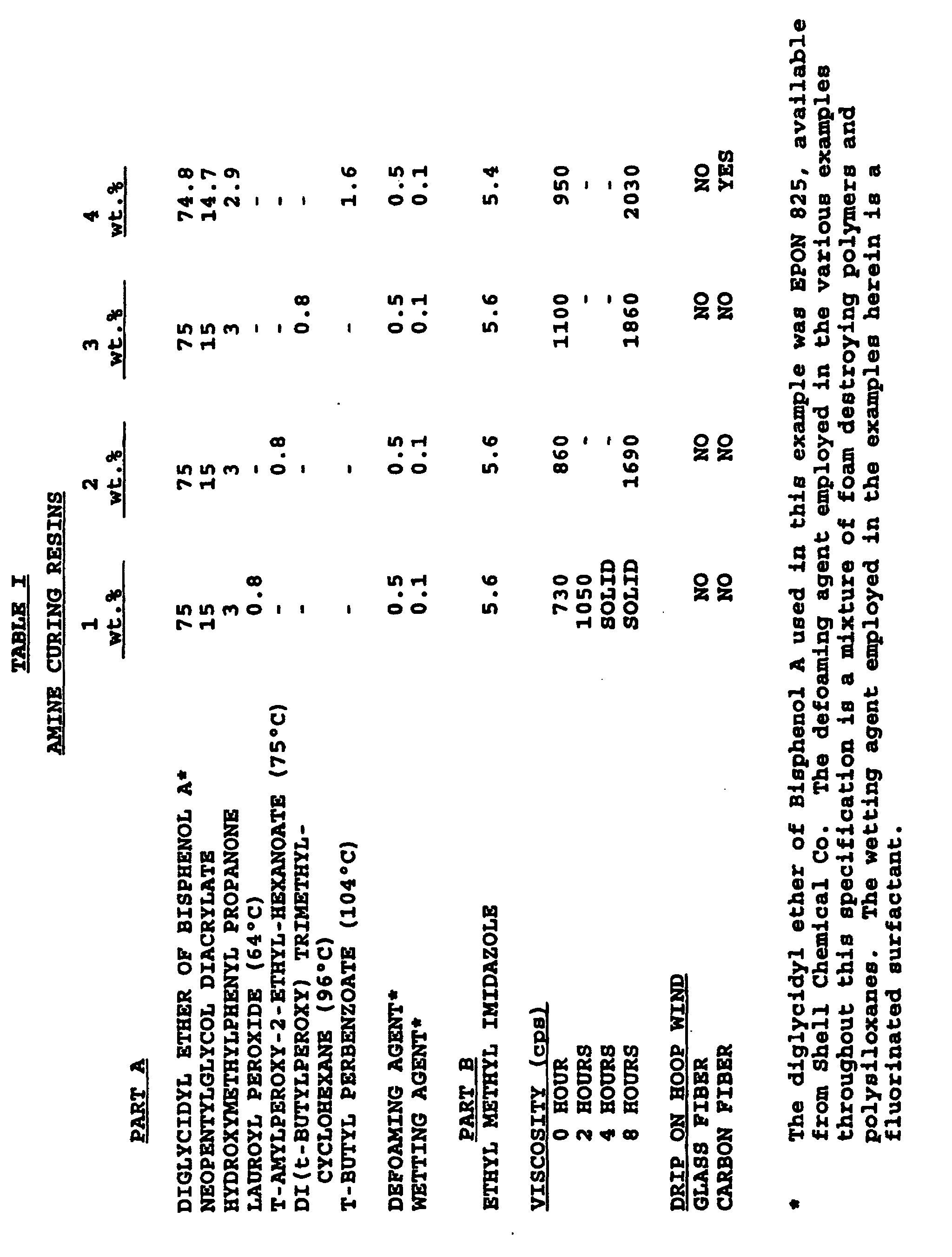

### Example 2

Anhydride curing resin compositions (Compositions 5-8 set forth in Table II below) were produced in accordance with the procedures of the present invention. As in Example 1 above, articles were made using glass and carbon fibers coated with the anhydride curing resins. Glass fiber articles were wound at 30.5 cm/sec (12 inches/sec.) and at 50.8 cm/sec (20 inches/sec.), and at each winding speed, articles were made using single and double irradiations at the intensities as described in Example 1. Upon heat cure none of the resins were observed to drip.

Carbon fiber articles were also formed at a winding speed of 10.2 cm/sec (4 inches/sec.) using both single and double exposures to actinic radiation. The intensities of the UV light source were 450 mW/cm² on the fiber on emerging from the resin bath, and 250 mW/cm² on the fiber as it was wound on the mandrel. No drip was observed upon heat cure except for carbon fiber articles made using Composition 8, in which the peroxide was t-butyl perbenzoate.

As is evident from Table II, Compositions 5-8 are substantially identical except for the particular peroxide used. As with the amine curing resin compositions described above in Table I, it is apparent from the drip data that peroxides having a 10 hour T_{½} of less than 104°C enable anhydride curing compositions to be formulated which do not drip on heat-curing. As was the case in Example 1 above, Composition 8, a resin containing t-butylperbenzoate, when applied to UV-opaque carbon fiber, dripped during heat cure.

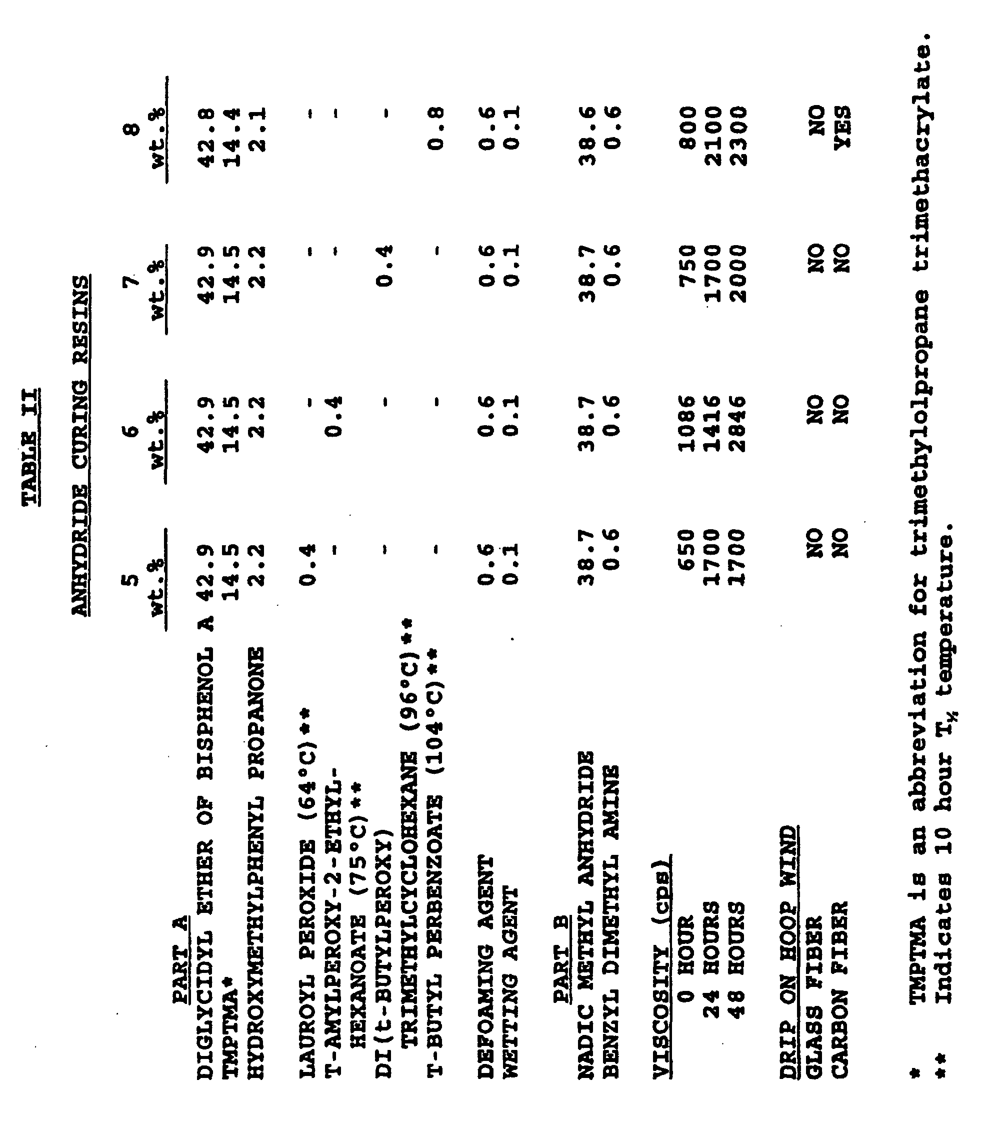

### Example 3

Resin compositions formulated in accordance with the procedures set forth herein are described in Table III. Composition 9 is representative of an amine curing resin of the present invention. Composition 10 is representative of Example 2 of U.S. Patent No. 4,092,443 to Green. Composition 11 is representative of the amine curing resin of the present invention, but without an organic peroxide.

**TABLE III**

| MATERIALS | 9 wt.% | 10 wt.% | 11 wt.% |
|---|---|---|---|
| 2,2-BIS(GLYCIDYLOXYPHENYL)PROPANE* | - | 47.2 | - |
| DIGLYCIDYLETHER OF BISPHENOL A** | 74.4 | - | 75.5 |
| ETHYL METHYL IMIDAZOLE | 5.6 | - | 5.7 |
| DICYANDIAMIDE | - | 3.7 | - |
| | | | |
| NEOPENTYL GLYCOL DIACRYLATE | 14.9 | 47.2 | 15.1 |
| T-AMYLPEROXY-2-ETHYLHEXANOATE | 1.5 | - | - |
| HYDROXYMETHYLPHENYL PROPANONE | 3 | - | 3.1 |
| BENZYL DIMETHYL ACETAL | - | 1.9 | - |
| | | | |
| DEFOAMING AGENT | 0.5 | - | 0.5 |
| WETTING AGENT | 0.1 | - | 0.1 |

| | | | |
|---|---|---|---|
| * EPON 828 from Dow Chemical Co. | | | |
| ** EPON 825 from Dow Chemical Co. | | | |

The compositions were then used in a filament winding process in accordance with the procedures described herein. These results are tabulated in Table IV, below. This process was conducted using fibers made from glass and graphite, respectively, with each composition being applied to each kind of fiber in separate preparations. In addition, as for previous Examples, two winding speeds were examined; 30.5 cm/sec (12 inches/sec.) and 50.8 cm/sec (20 inches/sec.) The coated fibers were first gelled by exposure to UV light at an intensity of 120 mW/cm³ as they were wound around a mandrel, and then placed in an oven for heat curing for 2 hours at a temperature of 150°C. The resin was then observed for evidence of dripping and for quality of part consolidation (Table IV). Contrary to customary practice for dual-curing filament processes, no rotation of the parts in the oven was performed. Rotation is conventionally required to compensate for excessive resin flow during heating which creates drip and non- uniform distribution of the resin on the fiber substrate.

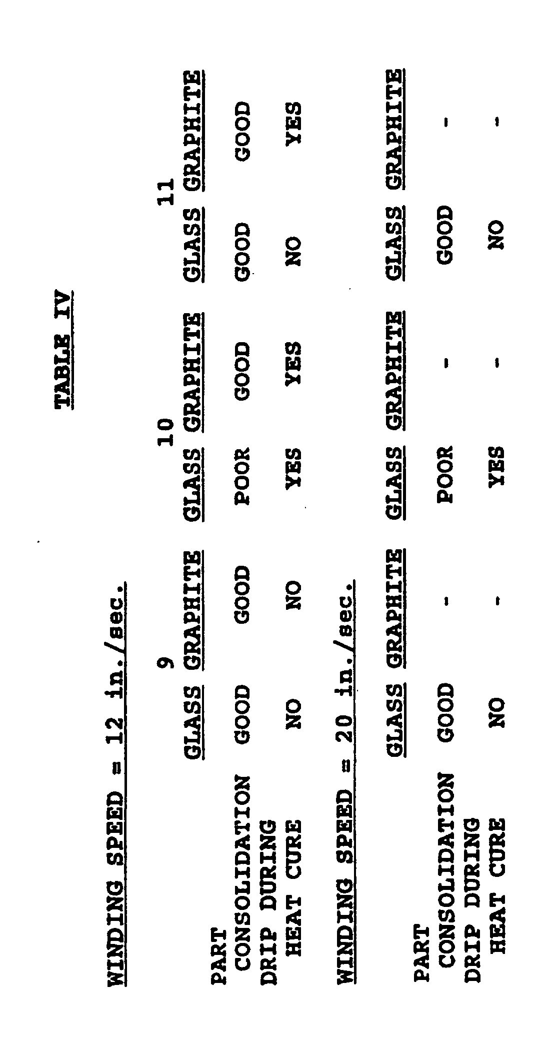

Composition 9, representing the amine curing resin of the present invention, was found to be free of drip and maintained uniformity of resin distribution throughout the substrate layers.

Composition 10, representative of those exemplified in the above-mentioned patent to Green, was found not to be useful for winding applications in accordance with the present invention. The results of the heat-cure demonstrated observable dripping and loss of uniformity in the resin distribution. The Green composition does not employ peroxides in accordance with the present invention. Instead, Green uses benzyl dimethyl acetal, described as a photopolymerization catalyst.

Composition 11 is representative of a composition similar to the amine curing resin of the present invention, but lacking the peroxide. The resin without peroxide exhibited variable results, as shown in Table IV above. When applied to graphite fiber, Composition 11 showed significant resin drip upon heat cure. However, when applied to glass fiber, at winding speeds of both 30.5 and 50.8 cm/sec (12 and 20 in./sec), the resin provided good part consolidation and no significant resin drip upon heat cure. It is believed that the glass fiber transmits sufficient UV light for the resin to gel even in the absence of the peroxide. But the composition without a peroxide is not effective as an amine curing resin for the impregnation of UV-opaque fibers.

Compositions 4 (Example 1) and 8 (Example 2), employing t-butyl perbenzoate with a T_{1/2} of 104°C, demonstrate performance substantially comparable to Composition 11 having no peroxide at all. These compositions are less effective for applications involving UV-opaque fiber, such as carbon fiber, and they are therefore less desirable. It is apparent from these experiments that the presence of peroxides having the requisite 10 hour T_{½} of less than 104°C enable the creation of a filament wound composite which has non-drip capability during the heat-cure stage.

### Example 4

Table V, below, summarizes a comparison of the viscosities of the resins of the present invention (Compositions 13 and 14) against the viscosity of a resin described by the aforementioned Drain et al. patent (Composition 12). The viscosities of Compositions 12-14 were determined by measuring the viscosity of 75 gram samples of each composition on a Brookfield DV I viscometer, using a 25°C water bath. The two resin examples of the present invention retain commercially useful low viscosities, i.e., <2000 cps, for at least eight hours at ambient light and temperature, while the Drain et al. composition becomes unworkable within two hours. It is apparent therefore that the compositions of the present invention possess the significant advantage of relatively long pot-life. A long resin pot-life is desirable for practical industrial use since it can eliminate the need for two component mixing/metering machines and their associated clean up and maintenance problems.

Table V, below, also provides a comparison of the glass transition temperatures (T_{g}) of the resin compositions of the present invention (Compositions 13 and 14) with that of a resin of the Drain et al. patent (Composition 12). Compositions 13 and 14 have T_{g}s of 120°C and 152°C, respectively, while Composition 12 has a T_{g} of 80°C. The higher glass transition temperatures of the compositions of the present invention provide greater temperature resistance when used in fiber composite articles, and unlike the resins of Drain et al., are useful in higher temperature applications.

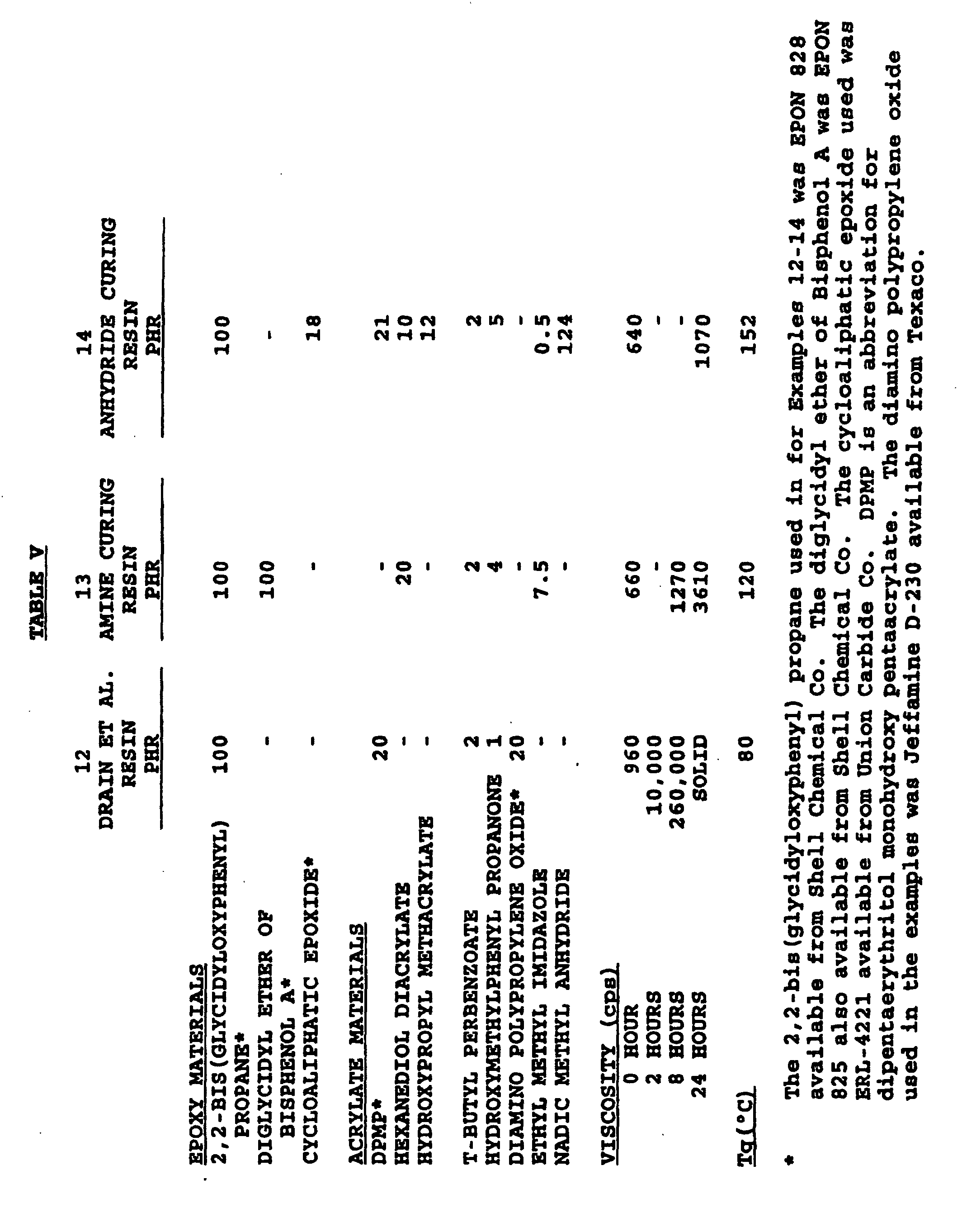

### Example 5

This example is intended to demonstrate, using thermogravimetric analysis, that the compositions and processes of the present invention allow for non-drip properties during heat cure. Through the use of thermogravimetric analysis, the uniformity of resin distribution can be determined, thereby evidencing the non-drip feature.

The data shown in Table VI are the results of a comparison of two filament windings using an amine curing resin composition of the present invention. The amine curing composition was prepared according to the procedures described herein using 74.4 wt.% diglycidyl ether of Bisphenol A, 5.6 wt.% ethyl methyl imidazole, 14.9 wt.% neopentyl glycol diacrylate, 1.5 wt.% t-. amylperoxy-2-ethyl-hexanoate, 3.0 wt.% 2-benzyl-2-methyl-1-phenyl-propan-1-one, along with 0.5 wt.% defoaming agent and 0.1 wt.% wetting agent. Filament winding was performed in general accordance with the procedures described above. Fiberglass was impregnated at a speed of 30.5 cm/sec (12 in./sec). and formed into articles by winding onto two separate mandrels. One winding was exposed to UV light at an intensity of 120 mW/cm². Another winding was not exposed to UV light. Both articles were heat-cured without rotation for 2 hours at 150°C.

**TABLE VI**

| | UV AND HEAT | HEAT ONLY |
|---|---|---|
| RESIN WT.% - TOP | 25.7 | 24.7 |
| RESIN WT.% - BOTTOM | 25.6 | 30.0 |
| | | |
| DRIP | NO | YES |

The data in Table VI are the results of thermogravimetric analysis (TGA) of the heat-cured articles. TGA was performed in accordance with the principles described in W.W. Wendlandt and P.K. Gallagher, "Instrumentation", Chapter 1 of Thermal Characterization of Polymeric Materials, E.A. Turi, ed., Academic Press, 1981.

The resultant articles were then subjected to thermogravimetric analysis for determination of uniformity of resin distribution. Sections of the top and bottom of the wound article were cut off, weighed, and the weighed samples then heated slowly to a temperature of 800°C, a temperature sufficient to burn off the resin coating leaving the heat resistant fiber behind. During the heating process, the samples weights are monitored by the instrument. The final difference in the weights of the sample before and after heating, provides a measure of the quantity of resin present in the sample. Uniformity of resin distribution is indicated if the resin proportion of each sample is substantially identical. If a substantial difference in sample weights is observed, then the resin is deemed to have been distributed non-uniformly on the article due to excessive resin flow and drip during heat cure.

If desired, the uniformity of the coating of the resin onto the fiber may be determined prior to winding of the coated fiber onto a mandrel. However, it will be noted by those having skill in the art that any initial irregularity or non-uniformity of resin coating on the fiber will not affect the uniformity of the wound article because of the ability of the gelled resin to flow and merge with overlapping resin during winding onto the mandrel.

Samples were taken from the top and bottom portions of each article. The TGA results show that the article initially cured by UV exposure retained uniform resin distribution without the necessity for rotating the part during the heat-cure step. Furthermore, no resin drip was observed on the UV cured article. The data also show that in the absence of UV exposure the resin will flow from the top portion of the article to the bottom, and that the resin will also drip during the heat-cure. The article will thereby become substantially anisotropic.

### Example 6

A further example of the anhydride curing compositions of the present invention is shown below in Table VII. Fiberglass articles made using this composition were UV cured and then heat cured, preferably by heating at 170°C for 1 hour.

**TABLE VII**

| RESIN COMPONENT | WT.% |
|---|---|
| DIGLYCIDYL ETHER OF BISPHENOL A | 57.47 |
| CYCLOALIPHATIC EPOXIDE* | 11.77 |
| MODIFIED DIGLYCIDYL ETHER OF BISPHENOL A* | 9.98 |
| DPMP* | 10.21 |
| HYDROXYPROPYL METHACRYLATE | 3.31 |
| T-BUTYL PERBENZOATE | 1.19 |
| WETTING AGENT | 0.12 |
| METHYL IMIDAZOLE | 5.85 |
| TOTAL | 100.00 |

| ANHYDRIDE COMPONENT | |
|---|---|
| NADIC METHYL ANYDRIDE | 98.92 |
| PHOTOINITIATOR | 1.08 |
| TOTAL | 100.00 |

| | |
|---|---|
| * In Table VII, the cycloaliphatic epoxide used was ERL 4221 available from Union Carbide Co. The modified diglycidylether of Bisphenol A was EPI-REZ 5027 available from Rhône Poulenc. DPMP is an abbreviation for dipentaerythritol monohydroxy pentacrylate. The photoinitiator used was 2-benzyl-2-dimethylamino-1-[4-(4-morpholinyl)phenyl]-1-butananone. | |

The following Examples 7 and 8 are intended to further illustrate the present invention.
In these Examples, amounts of the components are given as parts per hundred parts of the epoxy resin component (phr). That is, given the presence of 100 parts of epoxy resin, the other components in the composition are indicated as a number of parts of the composition relative to the epoxy resin.

### Example 7

**TABLE VIII**

| | COMPOSITIONS | |
|---|---|---|
| MATERIALS | 15 | 16 |
| CYANATE ESTER | | |
| AROCY L-10, phr | 100 | 100 |
| | | |

| CURING AGENT | | |
|---|---|---|
| NONYL PHENOL, phr | 2 | 2 |
| Cu NAPHTHENATE, phr | 0.30 | 0.30 |
| | | |

| EPOXY | | |
|---|---|---|
| EPON 825, phr | 100 | 100 |
| | | |

| ACRYLATE | | |
|---|---|---|
| DPEMPA*, phr | 40 | 20 |
| ETMPTA*, phr | - | 20 |
| DAROCURE 1173, phr | 6 | 6 |
| | | |

| PEROXIDE | | |
|---|---|---|
| LAUROYL PEROXIDE, phr | 1 | - |
| | | |

| VISCOSITY (cps) | | |
|---|---|---|
| 0 HAS | 1000 | 400 |
| 8 HRS | 1050 | 700 |
| | | |

| THERMAL DATA | | |
|---|---|---|
| T_{g}(°C) | 191 | 190 |

| | | |
|---|---|---|
| * DPEMPA is Dipentaerythritol monohydroxy pentaacrylate; ETMPTA is Ethoxylated trimethylolpropane triacrylate. | | |

Table VIII illustrates a cyanate ester resin composition in accordance with the invention (Composition 15) and a composition similar thereto but lacking a peroxide (Composition 16). The data indicate that the resin compositions of the invention provide substantially equivalent pot-life and glass transition temperature when compared to conventional cyanate ester dual curing compositions. It may also be noted that the T_{g} of the resins is believed to be unaffected by the acrylate component, but rather is controlled by the cyanate ester-epoxy polymerization.

### Example 8

**TABLE IX**

| | **COMPOSITIONS** | | |
|---|---|---|---|
| MATERIALS | 17 | 18 | 19 |
| EPOXY | | | |
| EPON 825, phr | 100 | 100 | 100 |
| | | | |

| CYANATE ESTER | | | |
|---|---|---|---|
| AROCY B-30, phr | 100 | 100 | 100 |
| NONYL PHENOL, phr | 3.0 | 3.0 | 3.0 |
| Sn(II) ETHYL HEXANOATE, phr | 0.2 | 0.2 | 0.2 |
| | | | |

| ACRYLATE | | | |
|---|---|---|---|
| NEOPENTYL GLYCOL DIACRYLATE, phr | 60 | 60 | 60 |
| DAROCURE 1173, phr | 8 | 8 | 8 |
| T-BUTYL PERBENZOATE, phr | - | 2 | - |
| LAUROYL PEROXIDE, phr | - | - | 2 |
| | | | |

| ADDITIVES | | | |
|---|---|---|---|
| BYK 070, phr | 1.32 | 1.32 | 1.32 |
| FC-430, phr | 0.26 | 0.26 | 0.26 |
| | | | |

| VISCOSITY (cps) | | | |
|---|---|---|---|
| INITITAL | 1090 | 1085 | 940 |
| 5 HRS | 1105 | 1100. | 965 |
| 8 ERS | 1160 | 1140 | |
| 24 HRS | - | - | 9.95 |
| T_{g}(°C) | 179 | 180 | 185 |
| | | | |

| WINDING CONDITIONS | | | |
|---|---|---|---|
| FIBER | GRAPHITE | GRAPHITE | GRAPHITE |
| SPEEDS (CM/SEC) ((IN./SEC.)) | 12 | 12 | 12 |
| LIGHT INTENSITY (MW/CM) | 425 | 425 | 425 |
| | | | |

| WINDING RESULTS | | | |
|---|---|---|---|
| DRIP (Y/N) | YES | YES | NO |
| WT.% RESIN LOSS AFTER HEAT CURE | 6.4 | 1.2 | 0 |

In this Example, three cyanate ester compositions were used to prepare filament wound articles according to the methods described elsewhere herein. The results of this comparison are illustrated in Table IX. The comparison of compositions.17, 18, and 19 focuses on the function of peroxide in imparting resistance of the compositions to drip during the heat cure phase of the filament winding cure process. Composition 17 employed no peroxide and produced significant drip on heat cure, with a resin loss from the wound article of about 6.4%. Composition 18 employed t-butylperbenzoate, a peroxide having a 10 hour decomposition half life at about 104°C, i.e., a temperature outside of the range of temperatures of peroxides useful for the invention. Composition 18 dripped significantly on heat cure, producing a loss of resin from the filament wound article of about 1.2%. Composition 19 was a composition employing a peroxide selected from the class of peroxides useful for the present invention, lauroyl peroxide, having a 10 hour decomposition half life at 64°C. Composition 19 is therefore representative of the compositions of the present invention. It is shown in Table IX that composition 19 produced no dripping on heat cure. Furthermore, no loss of resin from the filament wound article was observed. It will also be noted that the lauroyl peroxide improved the glass transition temperature of the resin composition to 185°C compared to 179°C and 180°C for compositions 17 and 18, respectively.

## Claims

1. A process for forming fiber resin composites which comprises:-
(i) providing a liquid resin composition comprising
a) an epoxy component including at least one polyepoxide resin curable by heat;
b) an olefinically unsaturated monomer component including at least one polyolefinically unsaturated monomer curable by actinic radiation;
c) at leapt one photoinitiator;
d) at least one heat-activated organic peroxide, said peroxide having a 10 hour decomposition half-life at a temperature of from 50°C to 104°C;
e) at least one heat activated curing agent, and
f) optionally, a cyanate ester component;
(ii) contacting a fiber with said liquid resin composition to form a fiber resin composite and subjecting said fiber resin composite to actinic radiation sufficient to permanently immobilize the polyepoxide resin to a gelled state which will resist substantial resin drip during the subsequent heat cure process; and
(iii) subjecting the fiber resin composite to heat sufficient to decompose the peroxide having a 10 hours decomposition half-life at a temperature of from 50 to less than 104°C and to cure said polyepoxide.

2. The process of claim 1, wherein the liquid resin composition further comprises a cyanate ester component and wherein the heat activated curing agent is selected from the group consisting of organo-metal compounds, inorganic metal salts, phenolic compounds and solutions of organo-metal compounds in phenolic compounds.

3. The process of claim 2, wherein the organo-metal compound is selected from the group consisting of copper (II) acetylacetonate, copper(II) naphthenate, cobalt (II) acetylacetonate, zinc (II) naphthenate, zinc(II) ethylhexanoate, maganese (II) naphthenate, cyclopentadienyl iron(II) dicarbonyl dimer, titanium bis (ethyl-3-oxobutanolato-O¹,O³) bis (2-propanolate), dibutyltin (IV) dilaurate, and mixtures thereof.

4. The process of claim 3, wherein the organo-metal component is included in an amount of 0.01 wt.% to 1.0 wt.%.

5. The process of claim 2 wherein the phenolic compound is selected from the group consisting of phenol, nonyl phenol, bisphenol A, cresol, catechol, and mixtures thereof.

6. The process of claim 3 wherein the phenolio component is included in an amount of from 0,1 wt . % to 10.0wt.%.

7. The process of claim 2 wherein the heat activated curing agent comprise copper (II) naphthenate in nonyl phenol.

8. The process of claim 2 wherein said composition has an initial viscosity of about 2000 centipoise or less and is capable of retaining said viscosity for at least 6 months at ambient temperature.

9. The process of claim 1 wherein the cyanate ester is not present and the heat activated curing agent is selected from the group consisting of dicyandiamides, boron trifluoride:amine complexes, boron trichloride amine complexes, latent amine curatives, tertiary amines and aromatic polyamines, imidazoles. carboxylic anhydrides and mixtures thereof.

10. The process of claim 9, wherein the heat activated curing agent is selected from the group consisting of 2-ethyl-4-methylimidazole, 1-(2-cyanoethyl)-2-ethyl-α-methyl-imidazole and 2-Phenyl-4,5-dihydroxymethyl imidazole.

11. The process of claim 9 wherein there is additionally included at leapt one accelerator for the carboxylic anhydride.

12. The process of claim 9 wherein the carboxylic acid anhydride is selected from the group consisting of methyltetrahydrophthalic anhydride, methylhexahydrophthalic anhydride, chlorendic anhydride, nadic methyl anhydride and mixtures thereof.

13. The process of claim 12 wherein the anhydride is included in an amount of from 33 wt.% to 43 wt.%.

14. The process of claim 13 wherein the anhydride accelerator is selected from the group consisting of dicyandiamide, boron trifluoride:amine complexes, boron trichloride : amine complexes, latent amine curatives, tertiary amines, aromatic polyamines, imidazoles and mixtures thereof.

15. The process of claim 14 wherein the anhydride accelerator is selected from the group consisting of benzyl dimethylamine, 1-(2-cyanoethyl)-2-ethyl-4-methylimidazole, 2-ethyl-4-methyl imidazole, and 2,4-diamino-6 [2'-methyl-imidazolyl-(1)']ethyl-s-triazine isocyanurate adduct.

16. The process of claim 12 wherein the anhydride accelerator is included in an amount of from 0.1 wt.% to 5.0 wt.%.

17. The process of claim 11 wherein said viscosity remains from 300 centipoise to 2,000 centipoise for a minimum of about 6 hours at a temperature of from ambient temperature to 60°C.

18. The process of claim 9 wherein said dual-curing liquid composition has an initial viscosity of about 2000 centipoise of less and is capable of retaining said viscosity for at least 2 hours at a temperature of from ambient temperature to 60°C.

19. The process of claim 9 wherein said viscosity remains from 300 centipoise to 2, 000 centipoise for a minimum of 6 hours at a temperature of from ambient temperature to 60°C.

20. The process of claims 1, 2 or 10 wherein the organic peroxide is selected from the group consisting diacylperoxides, peroxydicarbonates, peroxyesters, peroxyketals, and mixtures thereof.

21. The process of claim 20 wherein the organic peroxide is selected from the group consisting of lauroyl peroxide, t-amylperoxy-2-ethylhexanoate and 1,1-di(t-butylperoxy)-3,3,5-trimethylhexane, and mixtures thereof.

22. The process of claim 20 wherein the polyepoxide resin is selected from the group consisting of polyglycidyl and poly(β-methylglycidyl)ethers of dihydric and poly-hydric alcohols and phenols, novolaks, alkyl-substituted phenols and halogen-substituted phenols, poly(N-glycidyl) compounds obtained from amines containing at least two amino-hydrogen atoms, triglycidylisocyanurate. N, N'-diglycidyl derivates of cyclic alkaline ureas and hydantoins, poly (9-glycidyl) derivatives of dithiols, and mixtures thereof.

23. The process of claim 22 wherein the polyepoxide resin is selected from the group consisting of diglycidyl ethers of bisphenols.

24. The process of claims 1, 2 or 10 wherein the polyolefinically unsaturated monomer is selected from the group consisting of acrylic and methacrylic resins, vinyl monomers, unsaturated polyesters solubilized in vinyl monomers, and mixtures thereof.

25. The process of claim 24 wherein the polyolefinically unsaturated monomer is selected from the group consisting of trimethylolpropane trimethacrylate, trimethylolpropane triaorylate, dipentaerythritol monohydroxypentaacrylate, pentaerythritol triacrylate, ethoxylated trimethylolpropane triacrylate, 1,6-hexanediol diacrylate, neopentyl glycol diacrylate pentaerythritol tetraacrylate, and 1,3-butylene glycol diacrylate.

26. The process of claims 1, 2 or 10 wherein the photoinitiator is selected from the group consisting of benzophenone and substituted benzophenones, acetophenone and substituted acefophenones, benzoin and its alkylethers, xanthone and substituted xanthones, camphoroquinone peroxyesters, 9-fluorene carboxylic acid peroxyesters, and mixtures thereof.

27. The process of claim 26 wherein the photoinitiator is selected from the group consisting of 2-hydroxy-2-methyl-1-phenyl-propan-1-one and 2-benzyl-2-(dimethylamino)-1-[4-(4-morpholinyl) phenyl] -1-butanone.

28. The process of claim 26 wherein the organic peroxide is included in an amount of from 0.2 wt.% to 2 wt.%.

29. The process of claim 9 wherein the epoxy component is included in an amount of from 60 wt.% to 85 wt.%.

30. The process of claim 24 wherein the polyolefinically unsaturated monomer is included in an amount of from 5 wt.% to 30 wt.%.

31. The process of claim 1, 2 or 9 wherein the photoinitiator is included in an amount from 1 wt.% to 10 wt.%.

32. The process of claim 9 wherein the heat activated curing agent for the epoxy component is included in an amount of from 2 wt.% to 10 wt.%.

33. The process of claim 1, 2 or 9 wherein the organic peroxide is included in an amount of from 0.2 wt.% to 2 wt.%.

34. The process of claim 33 wherein the polyepoxide resin is included in an amount of from 37 wt.% to 48 wt.%.

35. The process of claim 34 wherein the polyepoxide resin is included in an amount of from 40 wt.% to 45 wt.%.

36. The process of claim 34 wherein the polyolefinically unsaturated monomer is included in an amount of from 10 wt.% to 30 wt.%.

37. The process of claim 34 wherein the photoinitiator is included in an amount of from 1.5 wt.% to 5 wt.%.

38. The process of claim 2 wherein the cyanate ester is selected from the group consising of monomeric, oligomeric and polymeric cyanate ester compounds having at least two --OCN functional groups and having a cyanate equivalent weight from about 50 to about 500.

39. The process of claim 38, wherein the cyanate ester is selected from the group consisting of dicyanate esters of bisophenol A, dicyanate esters of tetramethyl bisphenol F, dicyanate esters of bisphenol E, dicyanate oligomers of bisphenol A, polycyanate esters of dicyclopentadiene phenol copolymers, and mixtures thereof.

40. The process of claim 39, wherein the cyanate ester is inducted in an amount of from 25 wt.% to 50 wt.%.

41. The process of any preceding claim 1 to 40 wherein the fiber is a graphite fiber.

42. The process of any preceding claim 1 to 40 wherein the fiber is a glass fiber.

43. The process of any preceding claim1 to 42 which comprises a filament winding or preparation of a prepreg,

44. The process of any preceding claim 1 to 42, which is in comprised in a process for providing filament wound articles.

## Patentansprüche

1. Verfahren zur Herstellung von Faser-Harzverbunden, umfassend
(i) Bereitstellen einer flüssigen Harzzusammensetzung, umfassend
a) eine Epoxykomponente, beinhaltend mindestens ein wärmehärtbares Polyepoxidharz;
b) eine olefinisch ungesättigte Monomerkomponente, umfassend mindestens ein polyolefinisches ungesättigtes Monomer, das durch Aktinidenstrahlung härtbar ist;
c) mindestens einen Photoinitiator;
d) mindestens ein wärmeaktivierbares organisches Peroxid, wobei das Peroxid bei einer Temperatur von 50°C bis 104°C eine Zersetzungshalbwertszeit von 10 Stunden besitzt;
e) mindestens ein wärmeaktivierbares Härtungsmittel, und
f) wahlfrei eine Cyanester-Komponente;
(ii) Zusammenbringen einer Faser mit der flüssigen Harzzusammensetzung unter Bildung des Faser-Harzverbunds und Unterwerfen des Faser-Harzverbunds einer so starken Aktinidenstrahlung, dass das Polyepoxidharz permanent im Gelzustand immobilisiert ist, der beim anschließenden Wärmehärtungsprozess im Wesentlichen einem Tropfen des Harzes widersteht;
(iii) Unterwerfen des Faser-Harzverbunds einer solchen Wärme, dass sich das Peroxid bei einer Temperatur von 50 bis weniger als 104°C mit einer Zersetzungshalbwertszeit von 10 Stunden zersetzt und das Polyepoxid härtet.

2. Verfahren nach Anspruch 1, wobei die flüssige Harzzusammensetzung zudem eine Cyanester-Komponente enthält und das wärmeaktivierbare Härtungsmittel ausgewählt ist aus der Gruppe Organometallverbindungen, anorganische Metallsalze, Phenolverbindungen und Lösungen der Organometallverbindungen in Phenolverbindungen.

3. Verfahren nach Anspruch 2, wobei die Organometallverbindung ausgewählt ist aus der Gruppe Kupfer (II) -actetylacetonat, Kupfer(II)-naphthenat, Kobalt(II)-actetylacetonat, Zink(II)-naphthenat, Zink (II) - ethylhexanoat, Mangan(II)-naphthenat, Cyclopentadienyl-eisen(II)-dicarbonyldimer, Titan-bis(ethyl-3-oxobutanolato-O¹,O³)bis (2-propanolat), Dibutylzinn(IV)-dilaurat und Gemische davon.

4. Verfahren nach Anspruch 3, wobei die Organometallverbindung in einer Menge von 0,01 bis 1,0 Gew.% enthalten ist.

5. Verfahren nach Anspruch 2, wobei die Phenolverbindung ausgewählt ist aus der Gruppe Phenol, Nonylphenol, Bisphenol A, Kresol, Katechol und Gemische davon.

6. Verfahren nach Anspruch 3, wobei die Phenolkompente in einer Menge von 0,1 bis 10 Gew.% enthalten ist.

7. Verfahren nach Anspruch 2, wobei das wärmeaktivierbare Härtungsmittel Kupfer(II)-naphthenat in Nonylphenol enthält.

8. Verfahren nach Anspruch 2, wobei die Zusammensetzung eine Anfangsviskosität von etwa 2000 Centipoise oder weniger besitzt und diese Viskosität mindestens 6 Monate bei Umgebungstemperatur halten kann.

9. Verfahren nach Anspruch 1, wobei der Cyanester nicht zugegen ist und das wärmeaktivierbare Härtungsmittel ausgewählt ist aus der Gruppe Dicyandiamide, Bortrifluorid:Aminkomplexe/ Bortrichlorid:Aminkomplexe, latente Aminhärtungsmittel, tertiäre Amine und aromatische Polyamine, Imidazole, Carbonsäureanhydride und Gemische davon.

10. Verfahren nach Anspruch 9, wobei das wärmeaktivierbare Härtungsmittel ausgewählt ist aus der Gruppe 2-Ethyl-4-methylimidazol, 1-(2-Cyanoethyl) -2-ethyl-α-methyl-imidazol und 2-Phenyl-4,5-dihydroxymethylimidazol.

11. Verfahren nach Anspruch 9, wobei zusätzlich enthalten ist mindestens ein Beschleuniger für das Carbonsäureanhydrid.

12. Verfahren nach Anspruch 9, wobei das Carbonsäureanhydrid ausgewählt ist aus der Gruppe Methyltetrahydrophthalsäureanhydrid, Methylhexahydrophthalsäureanhydrid, Chlorendic-Anhydrid, Nadicmethyl-Anhydrid und Gemische hiervon.

13. Verfahren nach Anspruch 12, wobei das Anhydrid in einer Menge von 33 bis 43 Gew.% enthalten ist.

14. Verfahren nach Anspruch 13, wobei der Anhydridbeschleuniger ausgewählt ist aus der Gruppe Dicyandiamid, Bortrifluorid:Aminkomplexe, Bortrichlorid:Aminkomplexe, latente Aminhärtungsmittel, tertiäre Amine, aromatische Polyamine, Imidazole und Gemische davon.

15. Verfahren nach Anspruch 14, wobei der Anhydridbeschleuniger ausgewählt ist aus der Gruppe Benzyldimethylamin, 1- (2-Cyanoethyl)-2-ethyl-4-methylimidazol, 2-Ethyl-4-methylimidazol und 2,4-Diamino-6[2'-methylimidazolyl-(1)')-ethyl-s-triazinisocyanurat-Addukt.

16. Verfahren nach Anspruch 12, wobei der Anhydridbeschleuniger in einer Menge von 0,1 bis 5,0 Gew.% enthalten ist.

17. Verfahren nach Anspruch 11, wobei die Viskosität für mindestens 6 Stunden bei einer Temperatur von Umgebungstemperatur bis 60°C zwischen 300 und 2000 Centipoise bleibt.

18. Verfahren nach Anspruch 9, wobei die Flüssigzusammensetzung eine Anfangsviskosität von etwa 2000 Centipoise oder weniger besitzt und diese Viskosität mindestens 2 Stunden bei einer Temperatur von Umgebungstemperatur bis 60°C halten kann.

19. Verfahren nach Anspruch 9, wobei die Viskosität mindestens 6 Stunden bei einer Temperatur von Umgebungstemperatur bis 60°C zwischen 300 und 2000 Centipoise bleibt.

20. Verfahren nach Anspruch 1, 2 oder 10, wobei das organische Peroxid ausgewählt ist aus der Gruppe Diacylperoxid, Peroxydicarbonate, Peroxyester, Peroxyketale und Gemische davon.

21. Verfahren nach Anspruch 20, wobei das organische Peroxid ausgewählt ist aus der Gruppe Laurylperoxid, t-Amylperoxy-2-ethylhexanoat und 1,1-di(t-Butylperoxy)-3,3,5-trimethylhexan und Gemische davon.

22. Verfahren nach Anspruch 20, wobei das Polyepoxidharz ausgewählt ist aus der Gruppe Polyglycidyl- und Poly(β-methylglycidyl)ether von dihydrischen und polyhydrischen Alkoholen und Phenolen, Novolacke, alkylsubstituierten Phenolen und halogensubstituierten Phenolen, Poly(N-glycidyl)-Verbindungen, erhalten von Aminen, die mindestens zwei Aminwasserstoffatome enthalten, Triglycidylisocyanurat, N,N'-Diglycidylderivaten von zyklischen alkalischen Harnstoffen und Hydantoinen, Poly(S-glycidyl)-Derivaten von Dithiolen und Gemischen davon.

23. Verfahren nach Anspruch 22, wobei das Polyepoxidharz ausgewählt ist aus der Gruppe Diglycidylether von Bisphenolen.

24. Verfahren nach 1, 2 oder 10, wobei das polyolefinisch ungesättigte Polymer ausgewählt ist aus der Gruppe Acrylsäure- und Methacrylsäureharze, Vinylmonomere, ungesättigte Polyester, gelöst in Vinylmonomeren und Gemische davon.

25. Verfahren nach Anspruch 24, wobei das polyolefinisch ungesättigte Monomer ausgewählt ist aus der Gruppe Trimethylolpropantrimethacrylat, Trimethylolpropantriacrylat, Dipentaerythritolmonohydroxypentaacrylat, Pentaerythritoltriacrylat, ethoxyliertem Trimethylolpropantriacrylat, 1,6-Hexandioldiacrylat, Neopentylglycoldiacrylat,Pentaerythritoltetraacrylat und 1,3-Butylenglycoldiacrylat.

26. Verfahren nach Anspruch 1, 2 oder 10 , wobei der Photoinitiator ausgewählt ist aus der Gruppe Benzophenon und substituierte Benzophenone, Acetophenon und substituierte Acetophenone, Benzoin und seine Alkylether, Xanthon und substituierte Xanthone, Camphorochinonperoxyester, 9-Fluorencarbonsäureperoxyester und Gemische davon.

27. Verfahren nach Anspruch 26, wobei der Photoinitiator ausgewählt ist aus der Gruppe 2-Hydroxy-2-methyl-1-phenyl-propan-1-on und 2-Benzyl-2-(dimethylamin)-1-[4-(4-morpholinyl) phenyl] -1-butanon.

28. Verfahren nach Anspruch 26, wobei das organische Peroxid in einer Menge von 0,2 bis 2 Gew.% enthalten ist.

29. Verfahren nach Anspruch 9, wobei die Epoxykomponente enthalten ist in einer Menge von 60 bis 85 Gew.%.

30. Verfahren nach Anspruch 24, wobei das polyolefinisch ungesättigte Monomer in einer Menge von 5 bis 30 Gew.% enthalten ist.

31. Verfahren nach Anspruch 1, 2 oder 9, wobei der Photoinitiator in einer Menge von 1 bis 10 Gew.% enthalten ist.

32. Verfahren nach Anspruch 9, wobei das wärmeaktivierbare Härtungsmittel für die Epoxykomponente in einer Menge von 2 bis 10 Gew.% enthalten ist.

33. Verfahren nach Anspruch 1, 2 oder 9, wobei das organische Peroxid in einer Menge von 0,2 bis 2 Gew.% enthalten ist.

34. Verfahren nach Anspruch 33, wobei das Polyepoxidharz in einer Menge von 37 bis 48 Gew.% enthalten ist.

35. Verfahren nach Anspruch 34, wobei das Polyepoxidharz in einer Menge von 40 bis 45 Gew.% enthalten ist.

36. Verfahren nach Anspruch 34, wobei das polyolefinisch ungesättigte Monomer in einer Menge von 10 bis 30 Gew.% enthalten ist.

37. Verfahren nach Anspruch 34, wobei der Photoinitiator in einer Menge von 1,5 bis 5 Gew.% enthalten ist.

38. Verfahren nach Anspruch 2, wobei der Cyanester ausgewählt ist aus der Gruppe monomere, oligomere und polymere Cyanesterverbindungen mit mindestens zwei --OCNfunktionellen Gruppen und die ein Cyanäquivalentgewicht von etwa 50 bis etwa 500 besitzen.

39. Verfahren nach Anspruch 38, wobei der Cyanester ausgewählt ist aus der Gruppe, bestehend aus Dicyanestern von Bisphenol A, Dicyanestern von Tetramethylbisphenol F, Dicyanestern von Bisphenol-E, Dicyanoligomeren von Bisphenol A, Polycyanestern von Dicyclopentadienphenol-Copolymeren und Gemischen davon.

40. Verfahren nach Anspruch 39, wobei der Cyanester in einer Menge von 25 bis 50 Gew.% enthalten ist.

41. Verfahren nach irgendeinem der Ansprüche 1 bis 40, wobei die Faser eine Kohlenstofffaser ist.

42. Verfahren nach irgendeinem der Ansprüche 1 bis 40, wobei die Faser eine Glasfaser ist.

43. Verfahren nach irgendeinem der Ansprüche 1 bis 42, umfassend ein Filamentwickeln oder Herstellen eines Prepregs.

44. verfahren nach irgendeinem der Ansprüche 1 bis 42, enthalten in einem Verfahren zur Bereitstellung von filamentgewickelten Gegenständen.

## Revendications

1. Procédé de formation de composites de résines et de fibres qui comprend:
(i) la fourniture d'une composition de résine liquide contenant :
(a) un composant époxy comprenant au moins une résine polyépoxy thermodurcissable ;
(b) un composant monomère insaturé oléfiniquement comprenant au moins un monomère insaturé polyoléfiniquement durcissable par une radiation actinique ;
(c) au moins un photoinitiateur ;
(d) au moins un peroxyde organique activé par la chaleur, ledit peroxyde ayant une demi-vie de décomposition de 10 heures à une température de 50°C à 104°C ;
(e) au moins un agent de durcissement activé par la chaleur, et
(f) éventuellement un composant cyanate ester ;
(ii) la mise en contact d'une fibre avec ladite composition de résine liquide pour former un composite de résine et de fibre et la soumission dudit composite de résine et de fibre à un rayonnement actinique suffisant pour immobiliser de façon permanente la résine polyépoxy dans un état gélifié qui va résister à un égouttement de résine substantiel pendant le traitement de thermodurcissement consécutif ; et
(iii) la soumission du composite de résine et de fibre à une chaleur suffisante pour décomposer le peroxyde ayant une demi-vie de décomposition de 10 heures à une température de 50°C à moins de 104°C et pour durcir ledit polyépoxyde.

2. Procédé selon la revendication 1, dans lequel la composition de résine liquide comprend de plus un composant cyanate ester et dans lequel l'agent de durcissement activé par la chaleur est choisi dans le groupe consistant en composés organométalliques, sels métalliques inorganiques, composés phénoliques et solutions de composés organométalliques dans des composés phénoliques.

3. Procédé selon la revendication 2, dans lequel le composé organométallique est choisi dans le groupe consistant en acétylacétonate de cuivre (II), naphténate de cuivre (II), acétylacétonate de cobalt (II), naphténate de zinc (II), éthylhexanoate de zinc (II), naphténate de manganèse (II), dimère de cyclopentadiényl-fer (II) dicarbonyle, bis-(éthyl-3-oxobutanolato-O¹,O³)-bis-(2-propanolate) de titane, dilaurate de dibutylétain (IV), et leurs mélanges.

4. Procédé selon la revendication 3, dans lequel le composant organométallique est inclus en une quantité de 0,01% en poids à 1,0% en poids.

5. Procédé selon la revendication 2, dans lequel le composé phénolique est choisi dans le groupe consistant en phénol, nonylphénol, bisphénol A, crésol, catéchol, et leurs mélanges.

6. Procédé selon la revendication 3, dans lequel le composé phénolique est inclus en une quantité de 0,01% en poids à 10,0% en poids.

7. Procédé selon la revendication 2, dans lequel l'agent de durcissement activé par la chaleur comprend du naphténate de cuivre (II) dans du nonyl phénol.

8. Procédé selon la revendication 2, dans lequel ladite composition a une viscosité initiale d'environ 2000 centipoises ou moins et est capable de conserver ladite viscosité pendant au moins 6 mois à la température ambiante.

9. Procédé selon la revendication 1, dans lequel le cyanate ester n'est pas présent et l'agent de durcissement activé par la chaleur est choisi dans le groupe consistant en dicyandiamides, complexes de trifluorure de bore et d'amine, complexes de trichlorure de bore et d'amine, agents de durcissement latents de type amine, amines tertiaires et polyamines aromatiques, imidazoles, anhydrides carboxyliques et leurs mélanges.

10. Procédé selon la revendication 9, dans lequel l'agent de durcissement activé par la chaleur est choisi dans le groupe consistant en 2-éthyl-4-méthylimidazole, 1-(2-cyanoéthyl)-2-éthyl-α-méthyl-imidazole et 2-phényl-4,5-dihydroxyméthyl-imidazole.

11. Procédé selon la revendication 9, dans lequel est inclus de plus au moins un accélérateur pour l'anhydride carboxylique.

12. Procédé selon la revendication 9, dans lequel l'anhydride d'acide carboxylique est choisi dans le groupe consistant en anhydride méthyltétrahydrophtalique, anhydride méthylhexahydrophtalique, anhydride chlorendique, anhydride méthyl nadique et leurs mélanges.

13. Procédé selon la revendication 12, dans lequel l'anhydride est inclus en une quantité de 33% en poids à 43% en poids.

14. Procédé selon la revendication 13, dans lequel l'accélérateur d'anhydride est choisi dans le groupe consistant en dicyandiamides, complexes de trifluorure de bore et d'amine, complexes de trichlorure de bore et d'amine, agents de durcissement latents de type amine, amines tertiaires, polyamines aromatiques, imidazoles et leurs mélanges.

15. Procédé selon la revendication 14, dans lequel l'accélérateur d'anhydride est choisi dans le groupe consistant en benzyl diméthylamine, 1-(2-cyanoéthyl)-2-éthyl-4-méthylimidazole, 2-éthyl-4-méthylimidazole et produit d'addition d'isocyanurate de 2,4-diamino-6-[2'-méthylimidazolyl-( 1 )' ]-éthyl-s-triazine.

16. Procédé selon la revendication 12, dans lequel l'accélérateur d'anhydride est inclus en une quantité de 0,1% en poids à 5,0% en poids.

17. Procédé selon la revendication 11, dans lequel ladite viscosité reste entre 300 centipoises et 2000 centipoises pendant un minimum d'environ 6 heures à une température comprise entre la température ambiante et 60°C.

18. Procédé selon la revendication 9, dans lequel ladite composition liquide à double durcissement a une viscosité initiale d'environ 2000 centipoises ou moins et est capable de conserver ladite viscosité pendant au moins 2 heures à une température comprise entre la température ambiante et 60°C.

19. Procédé selon la revendication 9, dans lequel ladite viscosité reste entre 300 centipoises et 2000 centipoises pendant un minimum de 6 heures à une température comprise entre la température ambiante et 60°C.

20. Procédé selon les revendications 1, 2 ou 10, dans lequel le peroxyde organique est choisi dans le groupe consistant en diacylperoxydes, peroxydicarbonates, peroxyesters, peroxycétals, et leurs mélanges.

21. Procédé selon la revendication 20, dans lequel le peroxyde organique est choisi dans le groupe consistant en peroxyde de lauroyle, peroxy-2-éthylhexanoate de t-amyle et 1,1-di(t-butylperoxy)-3,3,5-triméthylhexane et leurs mélanges.

22. Procédé selon la revendication 20, dans lequel la résine polyépoxyde est choisie dans le groupe consistant en éthers polyglycidyliques et poly(β-méthylglycidyliques) d'alcools dihydriques et polyhydriques et de phénols, novolaques, phénols alkyl-substitués et phénols halo-substitués, composés poly(N-glycidyliques) obtenus à partir d'amines contenant au moins deux atomes d'hydrogène de groupe amine, isocyanurate de triglycidyle, dérivés N,N'-diglycidyliques d'urées alcalines cycliques et d'hydantoïnes, dérivés poly(S-glycidyl) de dithiols, et leurs mélanges.

23. Procédé selon la revendication 22, dans lequel la résine polyépoxyde est choisie dans le groupe consistant en éthers diglycidyliques de bisphénols.

24. Procédé selon les revendications 1, 2 ou 10, dans lequel le monomère polyoléfiniquement insaturé est choisi dans le groupe consistant en résines acryliques et méthacryliques, monomères vinyliques, polyesters insaturés solubilisés dans des monomères vinyliques et leurs mélanges.

25. Procédé selon la revendication 24, dans lequel le monomère polyoléfiniquement insaturé est choisi dans le groupe consistant en triméthacrylate de triméthylolpropane, triacrylate de triméthylolpropane, monohydroxypentaacrylate de dipentaérythritol, triacrylate de pentaérythritol, triacrylate de triméthylolpropane éthoxylé, diacrylate de 1,6-hexanediol, diacrylate de néopentyl glycol, tétraacrylate de pentaérythritol et diacrylate de 1,3-butylène glycol.

26. Procédé selon les revendications 1, 2 ou 10, dans lequel le photoinitiateur est choisi dans le groupe consistant en benzophénone et benzophénones substituées, acétophénone et acétophénones substituées, benzoïne et ses éthers alkyliques, xanthone et xanthones substituées, peroxyesters de camphoroquinone, peroxyesters d'acide 9-fluorène carboxylique et leurs mélanges.

27. Procédé selon la revendication 26, dans lequel le photoinitiateur est choisi dans le groupe consistant en 2-hydroxy-2-méthyl-1-phényl-propan-1-one et 2-benzyl-2-(diméthylamino)-1-[4-(4-morpholinyl)-phényl]-1-butanone.

28. Procédé selon la revendication 26, dans lequel le peroxyde organique est inclus en une quantité de 0,2% en poids à 2% en poids.

29. Procédé selon la revendication 9, dans lequel le composant époxy est inclus en une quantité de 60% en poids à 85% en poids.

30. Procédé selon la revendication 24, dans lequel le monomère insaturé polyoléfiniquement est inclus en une quantité de 5% en poids à 30% en poids.

31. Procédé selon les revendications 1, 2 ou 9, dans lequel le photoinitiateur est inclus en une quantité de 1% en poids à 10% en poids:

32. Procédé selon la revendication 9, dans lequel l'agent de durcissement activé par la chaleur pour le composant époxy est inclus en une quantité de 2% en poids à 10% en poids.

33. Procédé selon les revendications 1, 2 ou 9, dans lequel le peroxyde organique est inclus en une quantité de 0,2% en poids à 2% en poids.

34. Procédé selon la revendication 33, dans lequel la résine polyépoxyde est incluse en une quantité de 37% en poids à 48% en poids.

35. Procédé selon la revendication 34, dans lequel la résine polyépoxyde est incluse en une quantité de 40% en poids à 45% en poids.

36. Procédé selon la revendication 34, dans lequel le monomère insaturé polyoléfiniquement est inclus en une quantité de 10% en poids à 30% en poids.

37. Procédé selon la revendication 34, dans lequel le photoinitiateur est inclus en une quantité de 1,5% en poids à 5% en poids.

38. Procédé selon la revendication 2, dans lequel le cyanate ester est choisi dans le groupe consistant en composés cyanate esters monomères, oligomères et polymères ayant au moins deux groupes -OCN fonctionnels et ayant un poids équivalent de cyanate d'environ 50 à environ 500.

39. Procédé selon la revendication 38, dans lequel le cyanate ester est choisi dans le groupe consistant en dicyanate esters de bisphénol A, dicyanate esters de tétraméthyl bisphénol F, dicyanate esters de bisphénol E, dicyanate oligomères de bisphénol A, copolymères de phénol et de polycyanate esters de dicyclopentadiène, et leurs mélanges.

40. Procédé selon la revendication 39, dans lequel le cyanate ester est inclus en une quantité de 25% en poids à 50% en poids.

41. Procédé selon l'une quelconque des revendications 1 à 40, dans lequel la fibre est une fibre de graphite.

42. Procédé selon l'une quelconque des revendications 1 à 40, dans lequel la fibre est une fibre de verre.

43. Procédé selon l'une quelconque des revendications 1 à 42, qui comprend un bobinage filamentaire ou la préparation d'un produit préimprégné.

44. Procédé selon l'une quelconque des revendications 1 à 42, qui est compris dans un procédé pour la fourniture d'articles obtenus par bobinage filamentaire.
